# EUROPEAN PATENT APPLICATION

(11) **EP 1 122 658 A1**
(43) Date of publication of application: **08.08.2001**
(21) Application number: 98932590.7
(22) Date of filing: 21.07.1998
(51) Int. Cl.: G06F 17/30

(54) **METHOD OF MANAGING CHANGE HISTORY OF WEB INFORMATION, MANAGEMENT DEVICE, AND RECORDING MEDIUM**

(71) Applicant: Athena Telecom Lab, Inc., Koganei-shi, Tokyo 184 (JP)
(72) Inventor: KAMIMURA, Kunio, Koganei-shi Tokyo 184-0011 (JP)
(74) Representative: Cabinet Hirsch
(86) International application number: JP9803246
(87) International publication number: WO0005661

(57) **Abstract**

Web data configures a network type relationship, relating mutually. It has been difficult to record and reproduce the changes in various part of such a network. This invention makes possible for end-users to manage alteration history of web data files realistically.

Data that manages alteration history cannot be handled by the current HTML specifications that describe the web data file. And former browser does not have a function to manage alteration history. Method B makes possible to "show web data file records of directed time, reproducing exact mutual relationship among them". Method B actualized as proxy actualizes above features by "deceiving" a browser adequately.

It becomes possible for operators to communicate with a proxy on a browser window, by "inserting a button for history management and HREF tag to the content of a browsing point file which is passed to the browser by Proxy B", "designating a special server name and special file name to an HREF, which are keywords to start the special process of Proxy B" and "starting a corresponding processes by detecting these keywords".

The distinctive feature of Method A is as follows. Beside the material file is recorded in the end-user computer because of its changes, web data file referring this material file is also recorded in alteration history. Here the reference to this material file is changed to reference to the record. If there is a web data file record generated by Method A, the alteration history of web data can be displayed with a usual browser.

## Description

### Technical Field

This invention relates to: method for managing alteration history of web data in which pieces of data relate mutually and configure a network type relationship, a computer-readable medium in which the above method is recorded, and an apparatus that manages an alteration history of web data.

### Background Art

### <Section 1 Web Data>

By the progress of web browsers ("browsers" hereafter), it is possible now to show web data, from Internet covering the world, on our computer screen. Web data is composed of HTML files and picture, sound, and animation files that are referred by HTML files. HREF tags in HTML files indicate movements among HTML files. SRC tags in HTML files refer files such as picture, sound and animation files. Plural HTML files often refers to one picture file (also sound or animation file). These movements and references make connections among HTML files, picture, sound, and animation files in many computers around the world, like a spider's web.

Web data on the Internet are always altered. For example, some part of HTML file or whole picture file could be changed. New HTML file could be also added as a destination of movement from the HTML file. Animation file, referred by HTML file, could be newly added or eliminated. Network of web data, that is like a spider's web, is altered every second, as shown above.

### <Section 2 The Current Web Data Management at End-user Side>

### <Section 2.1 Function of Browser>

Data displayed on a browser can be easily saved, by clicking "Save As" button of the browser. The HTML file that has been displayed is recorded in the end-user computer. However, such as a picture, which is refereed by an HTML file, is not recorded in it, therefore, the picture cannot be displayed when it is opened later.

In the offline process of a browser, data retained in the cache is displayed without communicating with the network. But the cache does not retain all of the data forever, and the data will not always appear on the screen when it is displayed in off line.

### <Section 2. 2 Products that record web data>

There are products on sale, which take in web data from the Internet and save them for a necessary amount of time. Each of following product name is trademark of each company. The WebWacker, based on a proxy web server process ("proxy" hereafter), is a product of AI SOFT. It records web data in a database assigned by an end-user. Lotus's WeBlicator and ASCII Something Good's Internet Ninja2 have similar function.

Browser requires a server for sending data specified by URL. If browser's proxy property is set, the requirement is sent to the proxy. The proxy analyzes this requirement and sends corresponding data to the browser, if it has valid data in its own cache. If the proxy does not have valid data, it passes the requirement to the server.

The products listed above record the data of a homepage on database, specified by the operator or by the process of a proxy. These products are also called proxy replica since they acts as if real proxy for the browser. However, we should note that they only record the latest web data. They do not have a function that retains old web data and manages alteration history.

### <Section 3 Need for Alteration History>

Internet data constantly changes. It is sometimes necessary to record not only the latest data but also old one. For example, there is a case to refer to similar technology for patent application. It is importance to find technology that was disclosed before the submission date of the patent. If the applicant describes its creativity referring URL of data disclosed on Internet, the data of the URL is often eliminated or changed when the application is disclosed to the public. One way to deal with this problem is to print out the data onto paper and keep it, but if doing so, it becomes impossible to search the data effectively with a computer.

We need a method for recording certain data from the enormous web data that is always changing. Browsers or products mentioned above, which record the web data, cannot record the old data because they write the latest data on the old data. These are result of policy of browser and proxy to show the latest data. Data to be displayed on the browser is assigned with URL, of which specification has no room to handle alteration history. This is also a limitation of HTML language system.

### <Section 4. Former Technology of History Management>

History management has been carried out on various subjects. With a UNIX history command, one can look through the history of commands that an operator has chosen and can choose a necessary command to re-execute it. The mechanism of history management is comparatively easy, because the history is on a simple chronological line.

However, it is not easy to record the ever-changing network and reproduce it when needed, because web data configure a network type relationship relating mutually. Browser can record a file displayed on a window and re-display it with the "back" and "forward" button, but this is done by recording address of data appeared to the screen in linear order, and is just an extension of a former technology.

### <Section 5 Definition of the Terminology>

### <Section 5.1 Data Browser Handles>

[Web data]: Browser is used to read data that are accessed through Internet or Intranet, but it is also used for reading other data. For instance, it is already used to read enormous technology data distributed on CD-ROM. Data, that this invention's method and apparatus target, are ones that can be handled by browsers tracing and displaying the mutual relationship of a given network and by software with similar functions. Such data is called "web data" in this description. Files that record web data are called [web data file]. Web data files are classified into browsing point files, and material files, which are defined next.

[Browsing Point Files]: HTML file, which has been main way of describing Internet data, has been expanded to those such as ActiveX control, HTML file with Java applet, ActiveX document, et cetera. In this description, "Browsing Point Files" is used to indicate files, which are displayed on a window of web browser and refer to picture, sound, and animation files. HREF of HTML language and the NavigateTo command of Visual Basic language indicate a move among browsing point files.

[Material Files]: Files such as Java applet, ActiveX component, picture file, sound file or animation file, which are referred by browsing point files, are called "Material Files", in this description.

HTML file is a browsing point file, but it is also treated as a material file when it is an element of frame. Browsing point files and material files are differentiated to make explanation simple, in most part of this description. However, Section 9.1 describes how to handle an HTML file (browsing point file) as a material file.

### <Section 5. 2 Original Web Data File and Its Record>

The original data, to be displayed on a browser, exists in a computer acting as a server on Internet. This is called [Original Web Data File]. Group of original web data files, is called [Original Web Data]. The original web data file, which is also a browsing point file, is called [Original Browsing Point File]. Original web data file that is also a material file is called [Original material file].

URL, which is consisting of computer (server) address in Internet and file path in the computer, indicates original web data. Data that assign the original web data file where to exist is called [Assignments of Original Web Data File]. If the web data is also a browsing point files, the assignment is called [Assignments of the original browsing point files]. If the web data is also a material files, the assignment is called [Assignments of original material files].

HTML language system or former browser manuals do not differentiate among original web data and the data displayed on the browser. URL is used to refer both of them. The purpose of browser is to display the latest data as possible as it can. Therefore, there is no reason to differentiate among the original and the copy. However, this invention needs to differentiate them, because it deals with alteration history of web data.

[Web Data File Record] is a record of (a copy of) original web data file in an end-user computer. If the original web data file is renewed several times and several web data file records are generated in an end-user computer as alteration histories, it is necessary to differentiate each record. [Assignments of web data file record] is data that specifies each web data file record. File path in end-user computer can specifies each record. Also, each record is specified with assignments of the database in end-user computer and a key that specifies data in the database. Group of web data file records is simply called [Web Data Record].

When "assignment of original web data file" is given to a browser from an end-user (or HTML file displayed on the browser), the content of original web data file is passed through the Internet to the browser, and the copy of it is recorded in a cache. The browser searches the cache, using the URL as a key, which assigns the original web data, and specifies a file of the copy recorded in the cache. Here, "assignment of cache + assignment of original web data file" is "assignment of web data file record".

When a web data file record is made, plural web data file records can be distinguished by switching the directory or the database where files are recorded. As long as a directory that accommodates files defers, the path that includes directories, can distinguish plural web data file records, even if they are recorded with the same file name. Furthermore, they can be distinguished in one database, if a mark or number is assigned to each file record.

When an assignment of web data file record is to browsing point files, it is called [Assignment of browsing point file record]. When an assignment of a web data file record is to material files, it is called [Assignment of material file record]. [Display of Web Data's Alteration History] is to display a record about web data file records.

### <Section 5.3 Other Terms>

[End-user Computer] means computer generating a web data file record or displaying a web data file record by end-user instruction. Computer that keeps the original web data file and provides it to end-user computers is called a web server in general, and is simply called [Server] in this description.

### <Section 6 Method A>

A product shown in Section 2.2, which records web data on an end-user computer, can keep each records of a web data file, if it changes database every time when it records data. However, there are problems of "difficulty in specifying the changing parts," and the "massive memory consumption because not just the altered parts but the entire subject data is recorded and kept each time."

Method A explained below, solves these problems. Simply saying, this is a method of recording changed browsing point files or material files in the end-user computer as web data file records, and adds data that instruct to display the alteration history as record data. The merit is that once it is recorded, the alteration history can be seen with a usual browser. Method A can be realized as a computer program (Section 10).

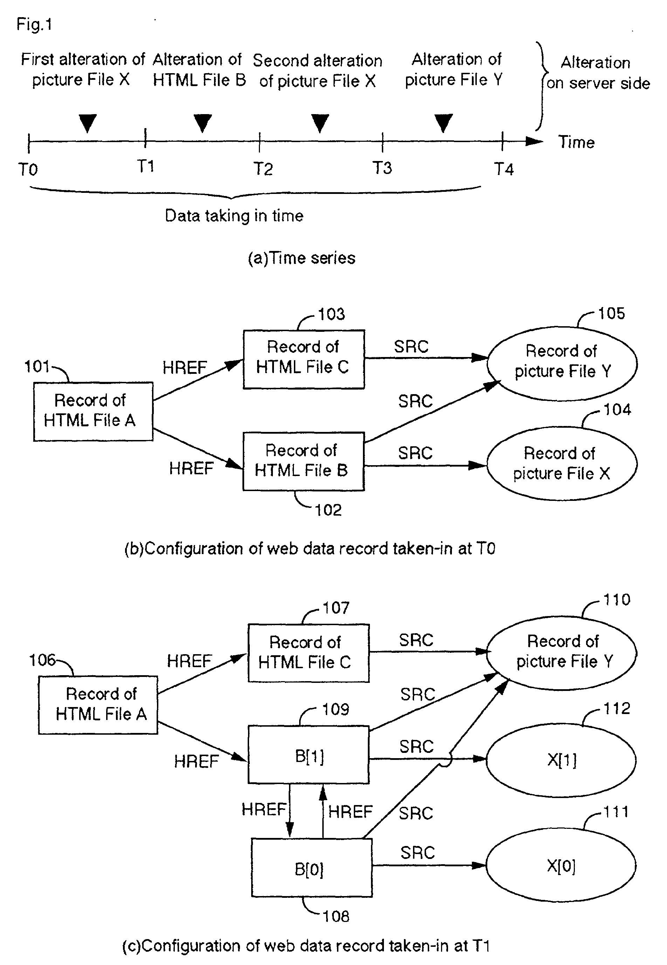

The methods of recording alteration history will be described below, using an example. In this example, T0 represents the point of the time when web data is taken into the end-user computer first. T1, T2, T3 and T4 represent the time when modifications are made chronologically. This is shown in Figure 1(a). It is assumed that HTML file is an example for a browsing point file, and picture file is one for a material file.

### <Section 6.1 Record of Alteration History>

### <Section 6.1.1 the Configuration of Web Data Taken in First>

The configuration of the web data record taken into the end-user computer at T0 is shown in Figure 1(b). It is possible to move from Record 101 of HTML File A to Record 102 of HTML File B and to Record 103 of HTML file with HREF. Record 102 of HTML File B refers to both Record 104 of picture File X and Record 105 of picture File Y, and Record 103 of HTML File C refers to record 105 of picture File Y. These web data file records exactly reflect the relationship of the original web data file.

### <Section 6.1.2 Alteration of picture File X, Part 1>

As can be seen in Figure 1(a), let us assume that picture File X is altered on the server's side, at between TO and T1, and the data is taken into the end-user computer at T1. The configuration of the web data records recorded in the end-user computer is shown in Figure 1(c). To distinguish them, Figure 1(c) shows the record of Picture File X generated at T0 as X[0] , and the record of picture File X generated at T1 as X[1] 112. X[0] 111 and X[1] 112 represent assignments of web data file record. Different file names or change of directories can be made as assignments of web data file record.

As picture File X, which is the reference of the record of HTML File B, changes from X[0] 111 then X[1] 112, the record of HTML File B recorded in the end-user computer is also changed from B[0] 108 then B[1] 109. This means that B[0] 108 , the record of B[0] at T1, and B[1] 109 , the record of HTML File B at T1, exist in the end-user computer. The difference is that their reference record of picture File X is either X[0] 111 or X[1] 112. X[1] 112 that is taken in at T1 is displayed if B[0]109 is opened by the web browser, and X[0] 111 is displayed if B[1]109 is opened by a browser,. If the movement from B[01 108 to B[1] 109 is described in B[0] 108 by HREF, and the reverse movement is described in B[1] 109, the changes can be seen by tracing a hyperlink described in HREF.

In the Figure 1, HTML File B is the only file that refers to picture File X. But actually, plural browsing point files sometimes refer to just one material file. So every time a renewed material file is taken into the end-user computer as a record, it is necessary to examine all the recorded HTML files, find all the records of the HTML file which is refer to the material file (picture File X in the above example), generate a copy, describe the moving HREF as in the HTML File B given above, and re-describe the assignment of the reference material file record.

### <Section 6.1.3 Modification of HTML File B>

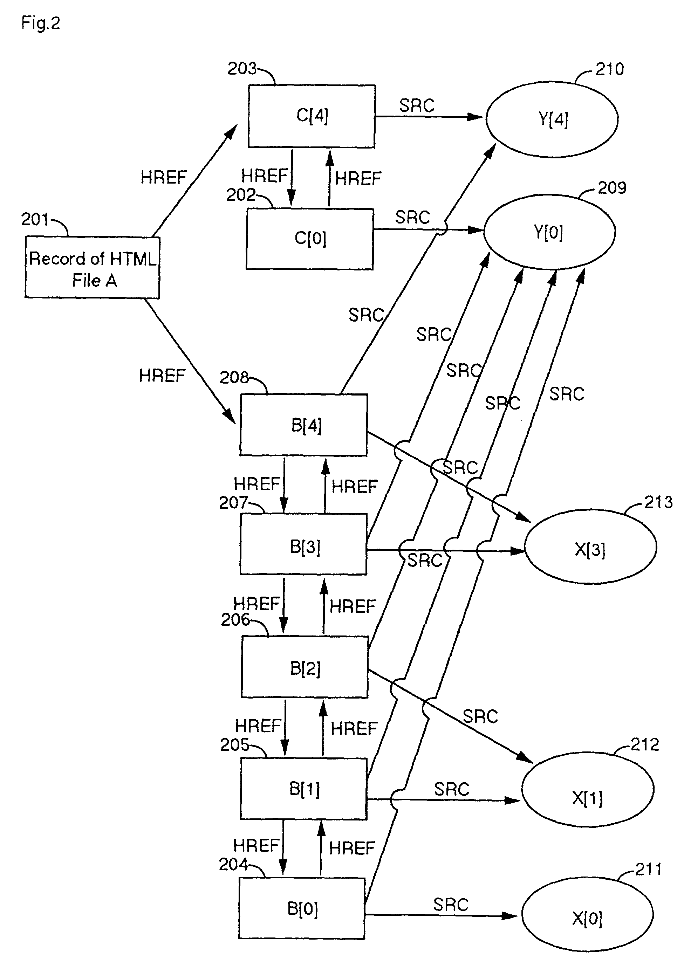

As Figure 1(a) shows, let us assume HTML File B is altered by the server times between T1 and T2, and that the end-user computer takes in that data at T2. In Figure 2, the record of HTML File B newly generated is shown as B[2] 206.

### <Section 6.1.4. Alteration of picture File X, Part 2>

As shown in Figure 1(a), let us assume that the sever altered picture file X at time between T2 and T3, and the end-user computer takes in the data at T3. X[3] 213 is a newly generated record of picture File X. HTML File B refers to the altered picture File X, so we now have to generate a new B[3] 207 as we have to change the record of the HTML File B. B[3] 207 refers to X[3] 213 whereas B[1]205 and B[2] 206 refer to X[1] 212.

As mentioned in the second half of section 6.1.2, a single material file is actually referred by plural browsing point files. Therefore, every time a new record of modified material file is generated, it is necessary to examine all the browsing point file records, to find browsing point file records that refer to the subject material file (picture File X in the given example), and to repeat the same operation as we did with HTML File B.

### <Section 6.1.5 Alteration of picture File Y>

As shown in Figure 1(a), let us assume that the server altered picture file Y at time between T3 and T4. And the data is taken into the end-user computer at time T4. To distinguish them, the first record of the picture File Y is named as Y[0] 209, and the record generated at T4 is named as Y[4] 210. In addition to B[0] 204, B[1] 205, B[2] 206, B[3] 207, and C[0] 202, which have referred to Y[0] 209, B[4] 208 and C[4] 203 which refer to Y[4] 210 are generated as new records.

Figure 2 is the configuration of web data records at T4 that are configured in the end-user computer as a result of the process from Section 6.1.1 to this section.

### <Section 6.2 Showing the Latest and Alteration History>

The destination from the HTML File A Record 201 with an HREF is B[4] 208 and C[4] 203, which are the latest browsing point files referring to the latest material file.

When something shifts from B[4] 208 B[3] 207 in Figure 2, the reference to Y[4] 210 changes to Y[0] 209. When something shifts from B[3]207 to B[2] 206, the reference to X[3] 213 changes to X[1] 212. When something shifts form B[2] 206 to B[1] 205, the record of the picture file to refer to does not change, but the state before the alteration of HTML File B at the time between T1 and T2 can be displayed. When B[1] 205 shifts to B{0}204, the reference to X[1] 212 changes to X[0] 211.

As you can see, we can trace back the old web data one by one on the browser by tracing HREF, from B[4] 208, which is the latest record of the HTML file. Furthermore, the changes of web data can be displayed by tracing HREFs, from B[0]204 , which is the oldest record of the HTML file.

In order to see web data file records when the web data file has been deleted, one can display the records, by making a bookmark of browsers. We can also display records by displaying the reference to the web data file record, or the browsing point file that has recorded prior movement. We can also accommodate the web data file record to a database and display it from the index.

### <Section 6.3 Characteristics of Method A>

If there is a web data file record generated by Method A (Figure 2 for example), the process of displaying alteration history of web data can be done by a usual browser. The characteristics of Method A are its procedures to generate a web data file record and its configuration of the data, that is made as a result. They can be summarized to the three following points:
(1) The end-user computer generates a new web data file record when it finds that the web data file is new one to be recorded or that there is a change in it compared to a former web data file record. This is recording process is called [Simple-recording].
(2) Accompanying with the simple-recording of a material file, it also simply-records change of reference of browsing point file to the new simple-recorded material file as alteration history of the browsing point file.
(3) HREF links moving among the browsing point file records are added between records changed in reference to material files and changed on browsing point files themselves.

The examples of the simply-recorded browsing point files as in above (1), are B[0] 204, B[2] 206 and C[0] 202. The examples of simply-recorded browsing point files in (2) above are B[1] 205 corresponding to the alteration 1 of Picture File X, B[3] 207 corresponding to the alterations 2 of Picture File X and B[4] 208 and C[4] 203 corresponding to the alterations of the Picture File Y.

The characteristics of Method A is the process of "generating the new file record found as a simple-record when the end-user computer detects the change in web data file, and generating a new record of the HTML file which switched the reference to the new simple-record." The point that this method is not a simple expansion of a former technology is to "generates a new record of the HTML File although there is no change in the HTML file to refer".

The detail of Method A will be explained in Section 10.

### <Section 6.4 Merits and Demerits of Method A>

Method A is improved, as it makes it possible to see changes in web data easily on the end-user computer. However, it is necessary to make a complex alteration history of web data. In spite of the simple conditions of Figure 1(a) and (b), Figure 2 that manages the alteration history is complicated. Under more realistic condition, the configuration of data that manages the alteration history of the web data is absolutely complicated.

Also, as explained in previous sections (Section 6.1.2 and the second half of Section 6.1.4), it is necessary to "examine all the browsing point file records that the end-user computer holds, find the browsing point file records that refer to the subject file, and carry out the process as explained in Section 6.1.2." every time of simple-recording. The process volume increases when the number of browsing point file records increase. These processes are carried out every time an alteration of a web data file is detected and it makes slow response of computer.

### <Section 7 Outline of Method B>

Method B, explained below, solves the demerits of Method A. Simply saying, Method B is a "method to select web data files that browsing point files refer to and move to, at the indicated time of history, and tell it to the browser". First, Method B will be explained by how its main process is realized by a proxy process, as an example. This proxy is called [Proxy B]. This section will focus on explaining the outline of Proxy B, and the details of Proxy B process will be explained in Section 8, where we assume the Proxy B is a computer program. Various forms of Method B will be explained in Section 9.

### <Section 7.1 Actualization of Method B by Proxy B>

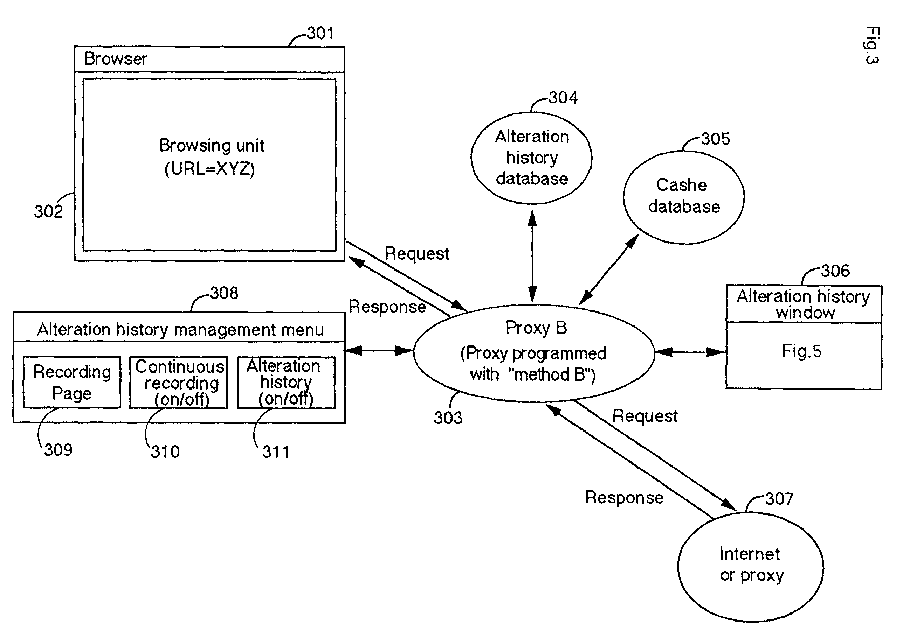

Browser 301 of Figure 3 communicates with Proxy B 303, which communicates with the Internet 307. We assume Browser 301 is a former browser with no function that handles alteration history of web data. Also, we assume the web data files that Browser 301 handles former HTML system (HTML 3.0), which has no special data managing alteration history.

Proxy B 303 carries out the recording process of alteration history of web data files. It also takes out the adequate web data file records, in response to the operator's requirement, from the web data file records as alteration history, and provides it. Proxy B manages alteration history of the web data, and deceives Browser 301 adequately to display the web data file record of a particular time.

### <Section 7.2 Configuration of Alteration History Management Data>

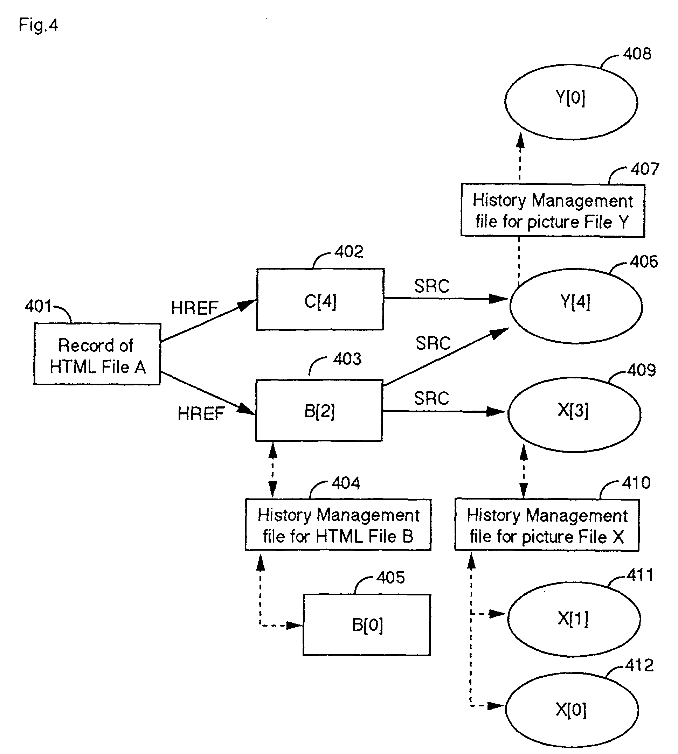

Figure 4 shows the overall configuration of web data records generated by Method B assuming Figure 1 (a) (b). Records of HTML files B[2] 403 and C[4] 402, which are referred by HREF from Record 401 of HTML File A, are the latest ( that is after T4) HTML file records, and X[3] 409 and Y[4] 406 they refer to are also the latest ones.

B[2] 403 corresponds to the history management file 404 for HTML File B, and with the content of this file, B[0] 405 can be identified. Figure 2 keeps B[0] 204, B[1] 205, B[2] 206, B[3] 207 and B[4] 208 corresponding to changes in picture File X and Y. On the other hand, Figure 4 just keeps HTML file record B[0] 405 taken in first and B[2] 403 that results from changes of HTML File itself (Section 6.1.3).

The history management file 410 for picture File X corresponds to X[3] 409, and with the content, X[1] 411 and X[0] 412 can be specified. In Figure 2 there is no referencing data among picture files X[0] 211, X[1]212 and X[3] 213 recorded as alteration history of picture File X. However, in Figure 4, the history management file 410 for picture File X connects the latest picture file records X[3] 409 and the X[0] 412 and X[1] 411, which are managed as its alteration history.

Similarly, the history management file 407 for picture File Y corresponds to Y[4] 406, and with this content, Y[0] 408 recorded as alteration history can be specified.

The alteration history database 304 of Figure 3 is the database that includes the history management file 404 for HTML File B, history management file 410 for picture X, and history management file 407 for picture File Y. The access to the alteration history file corresponding to the latest web data file record can be realized by referring to the database with the original data (URL for instance) to assign the web data file as a key.

### <Section 7.3 Outline of How Proxy B Works>

Figure3 explains the outline of Proxy B mechanism. When Proxy B starts, alteration history management menu 308 appears on the computer screen. Proxy B 303 reacts as an ordinary proxy when a requirement that assigns a browsing point file (URL=XYZ) is passed to Proxy B 303 from Browser 301. In other words, if the cache database 305 has the valid data for assigned URL, Proxy B provides it to Browser 301. If it does not, Proxy B gets the data from the Internet (or from other proxies), records it to the cache database 305 and provides the copy to Browser 301.

When recording page button 309 is pressed, the browsing point file displayed on Browser 301 and material file(s) referred are recorded in alteration history database 304. While the continuous recording button 310 is on, all the web data files displayed on the browser are recorded in alteration history database 304. When the alteration history button 311 is pressed, alteration history window 306 shows alteration history of the browsing point file displayed on Browser 301, and of the material file referred. Let us assume that alteration and taking-in were done as shown in Figure 1(a), and assume that web data record of Figure 4 was generated. Figure 5 shows the content of the alteration history window 306 when the alteration history button 311 is pressed, while B[2] displayed on Browser 301.

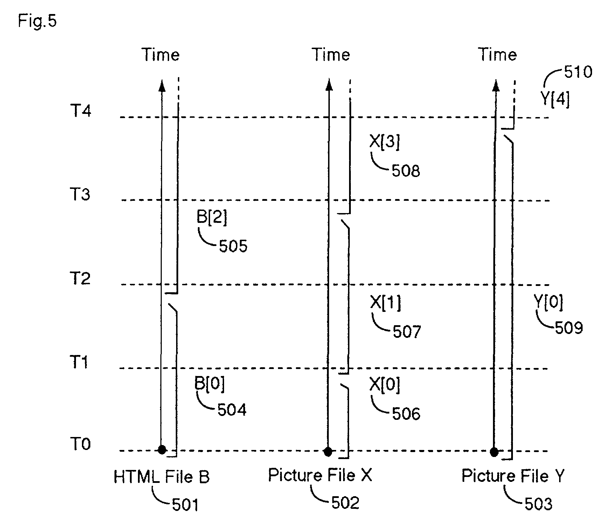

Time flows from bottom to up in Figure 5, and time of taking in files (time of making of the web data file record) aligns from T0 to T4. Each of the three time lines corresponds to HTML File B 501, picture File X 502, and picture File Y 503 from the left. The line on the left side of B[0] 504 in Figure 5 shows "B[0] recorded at T0 is valid until T2." The line on the left side of B[2] 505 in Figure 5 shows "B[2] recorded at T2 is valid from T2 (until the time updating the next data is detected)." Likewise: X[0]506 is valid from T0 until T1, X[1] 507 is valid from T1 until T3, and X[3] 508 is valid from T3. Y[0] 509 is valid from T0 until T4 and Y[4] 507 is valid from T4.

Let us assume that the operator selects a particular time section of Figure 5, the time between T1 and T2, for example. If Browser 301 requires HTML File B to Proxy B 303, Proxy B 303 provides the record of HTML File B, i.e., B[0] 504. And, Browser 301 requires the picture File X and picture File Y to Proxy B 303. In return, Proxy B 303 provides X[1] 507 and Y[0] 509 for Browser 301. By above procedures, Browser 301 precisely displays contents of HTML File B corresponding to the time section assigned between T1 and T2.

When "Renewal" button of Browser 301 displaying HTML File B is pressed, Browser 301 requires HTML file to Proxy B 303. Thus the above procedures will be invoked. If one starts a new browser for HTML File B, this browser requires HTML file of Proxy B 303, and the above procedures are invoked again.

### <Section 7.5 Merit of Method B Part 1>

The characteristic of Method B, which generates a web data file record, is that "it manages the alteration history for every web data file independently," thus the recording process of alteration history is much simpler than Method A.

On the other hand, the characteristics of the browsing process of alteration history by Method B is that "it provides the web data file record corresponding to a requirement of a web data file of the browser, when a specific time is assigned." That is, browser manages the mutual relationship of the web data file, but Method B itself does not. At this point, Method B greatly differs from Method A that generates a browsing point file and HREF links to display an alternation history.

Put in another way, "Proxy B 303 displays the record of the web data in the browser, by deceiving Browser 301 adequately." This "deceiving" method is effective to display web data record of a specific time, when there is no room to add data for managing alteration history to the HTML specifications (describing the web data file) and when the former browser has no function to manage alteration history.

The detail of Method B and its merits will be explained more in Section 8.

### Brief Explanation of the Illustrations

Figure 1: "Example of the Schedule to Renew Original Web Data File and Configuration of the Web Data Record".
Figure 2: "Final Configuration of the Web Data Record".
Figure 3: "Configuration of Proxy B and the Relationship of Browser, Internet or Proxy".
Figure 4: "Configuration of the Web Data Record".
Figure 5: "Example of Alteration History Window".

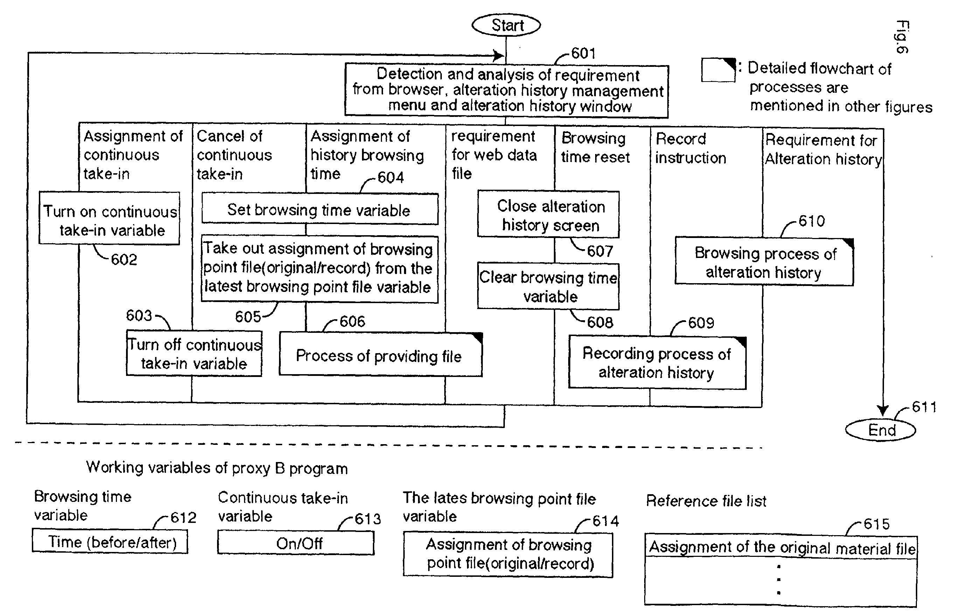

Figure 6: "Program Configuration of Proxy B".

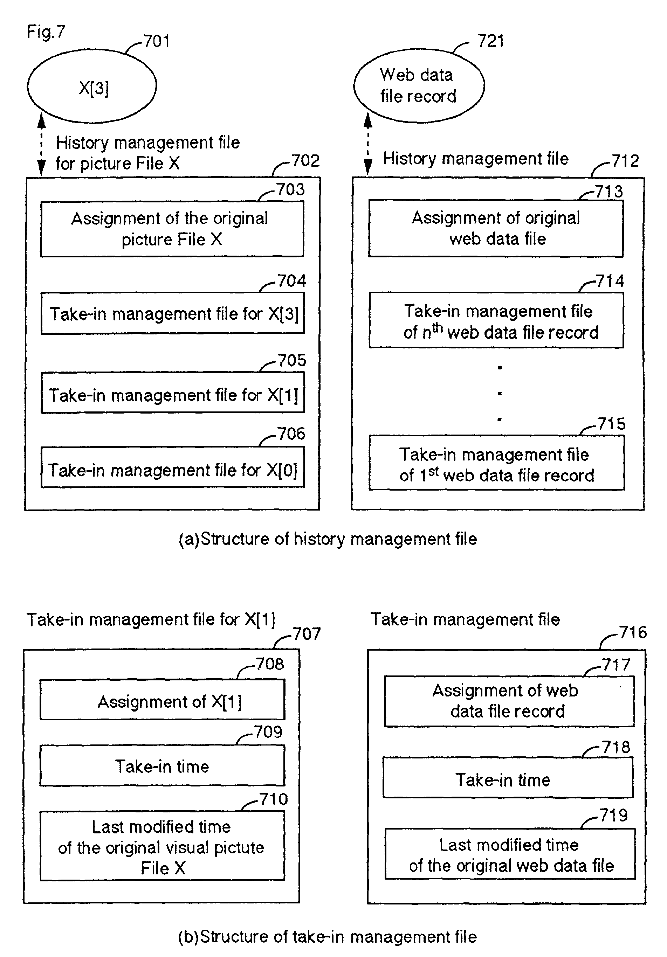

Figure 7: "Configuration of History Management File and Taking-in Management File".

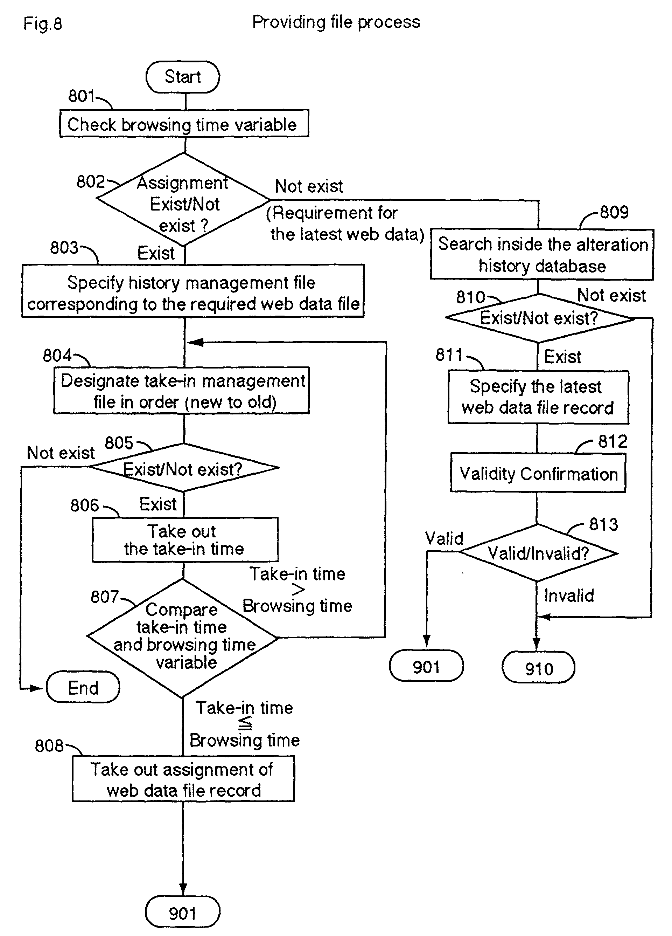

Figure 8: "Process of Providing File Part 1".

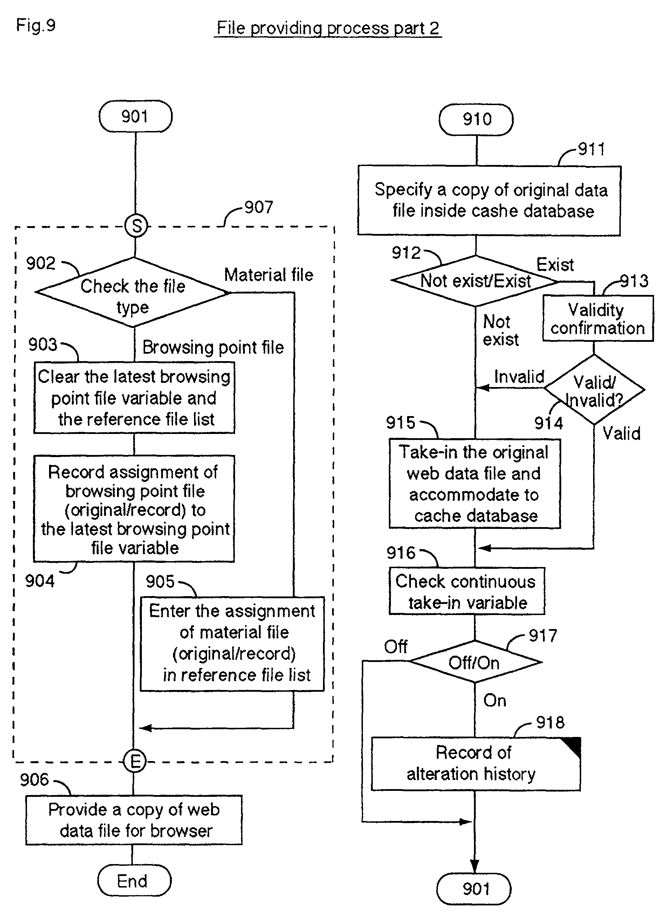

Figure 9: "Process of Providing File Part 2".

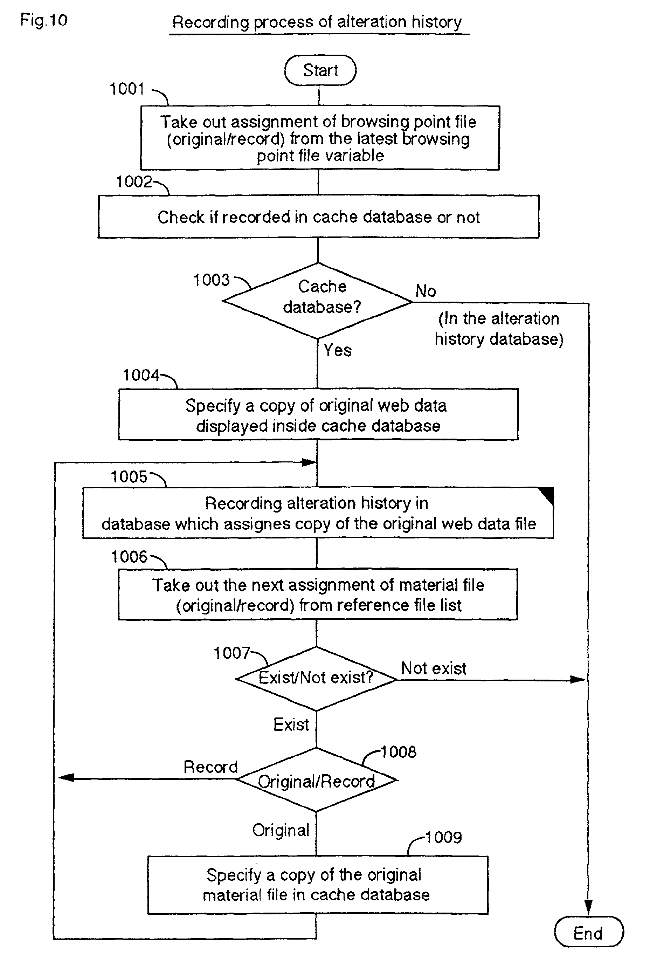

Figure 10: "Recording Process of Alteration History".

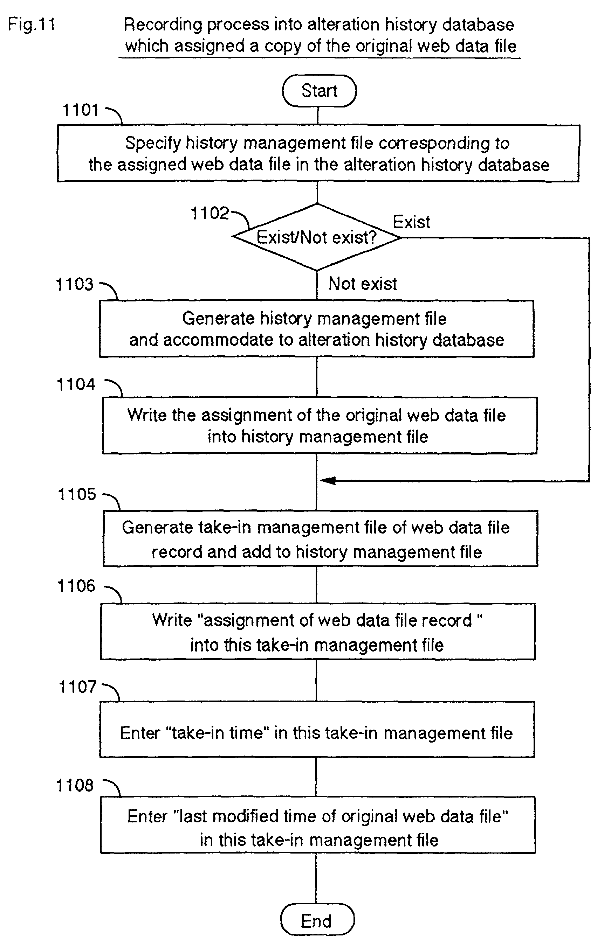

Figure 11: "Recording Process into the Alteration History Database Which Assigns the Copy of the Original Web Data File".

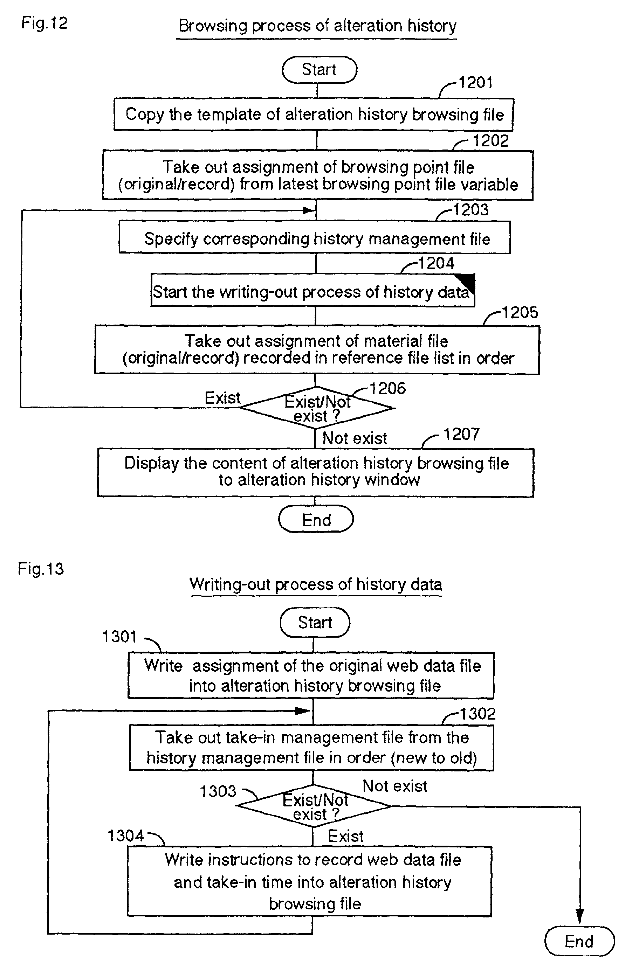

Figure 12: "Browsing Process of Alteration History".
Figure 13: "Writing out Process of History Data".

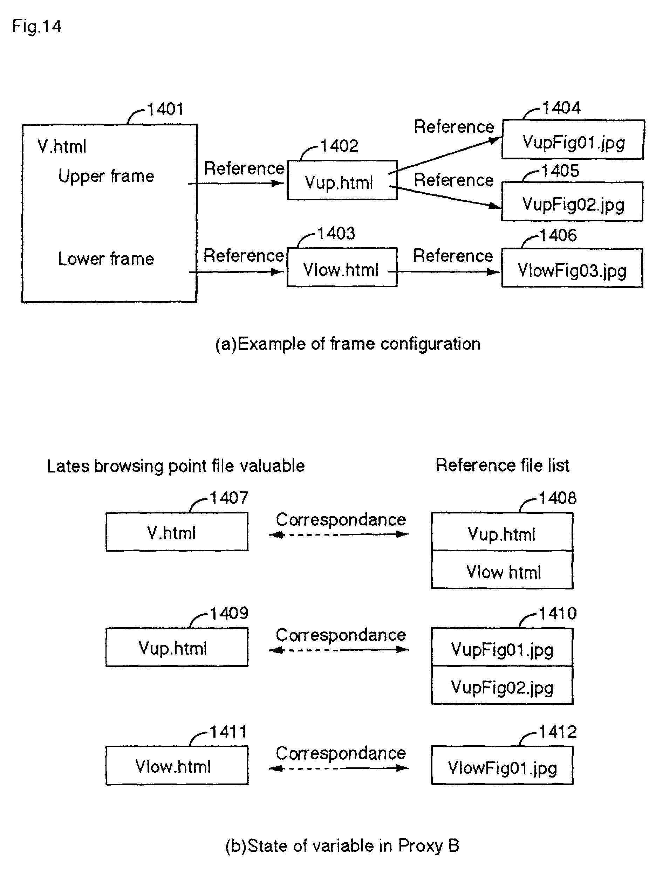

Figure 14: "Example of Frame Configuration and The State of the Work Variable in the Proxy B".

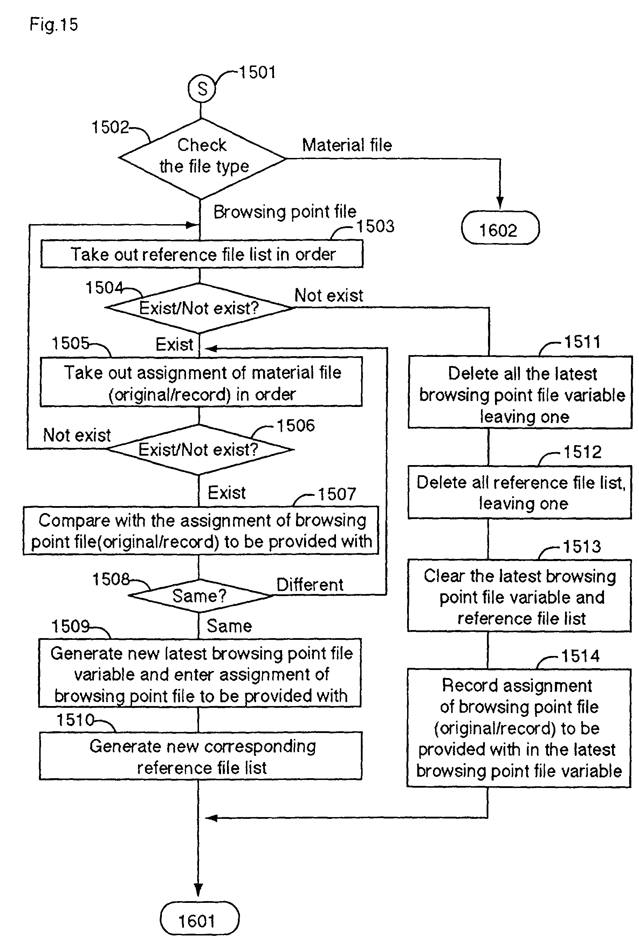

Figure 15: "Management Process of Alteration History Corresponding to Frame Window Part 1".

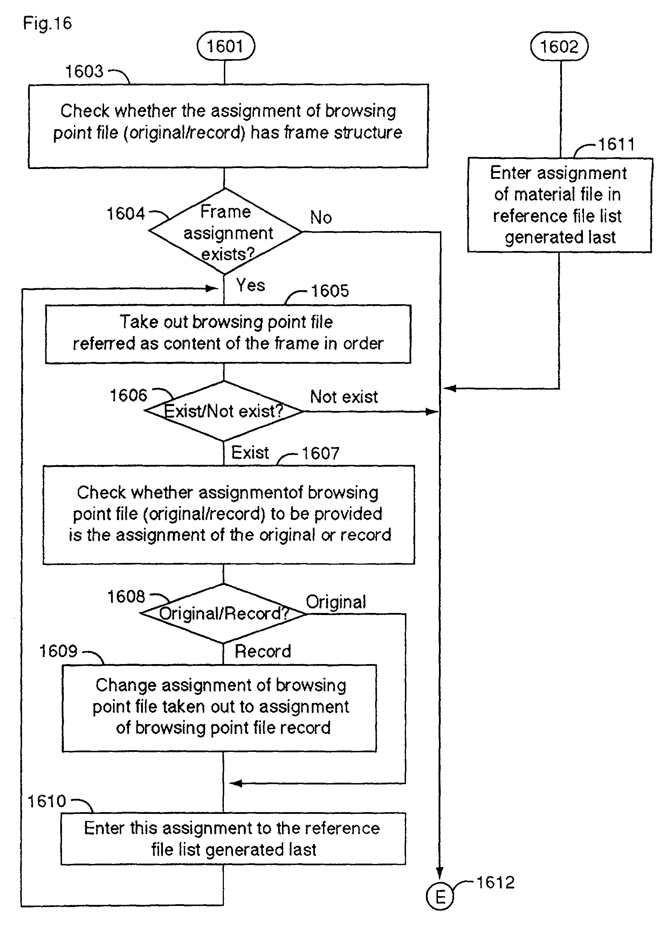

Figure 16: "Management Process of Alteration History Corresponding to Frame Window Part 2".

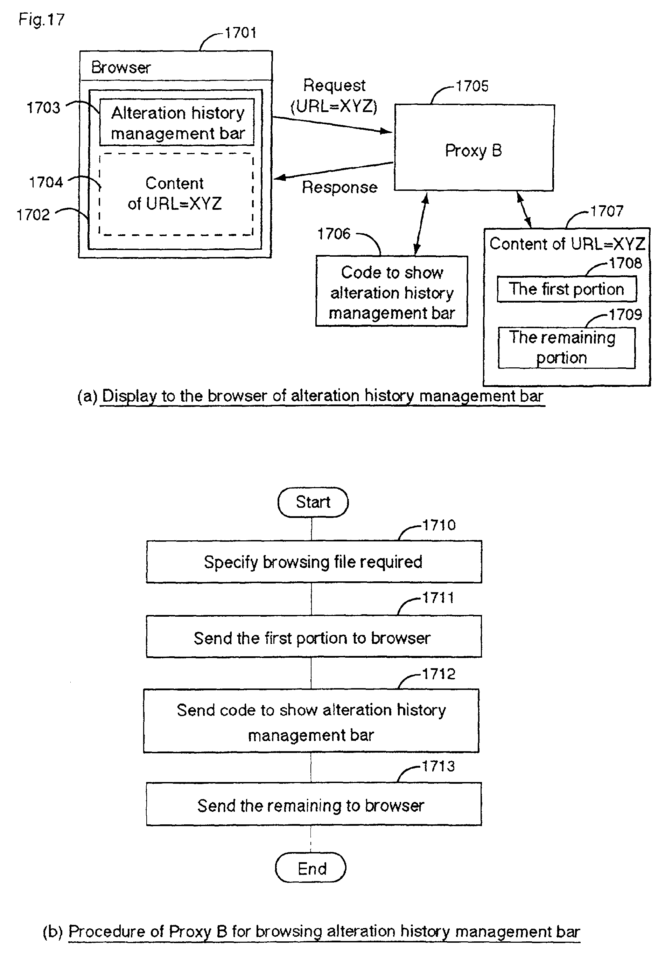

Figure 17: "Display of Alteration History Management Bar on a Browser and the Procedure of Proxy B".

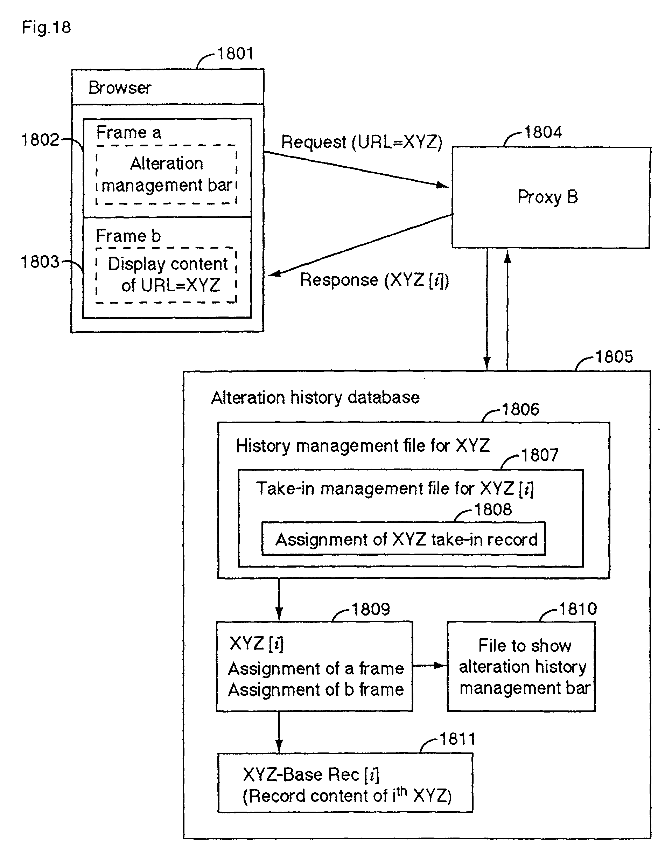

Figure 18: "Actualization Mechanism of Alteration History Management Interface by the Frame".

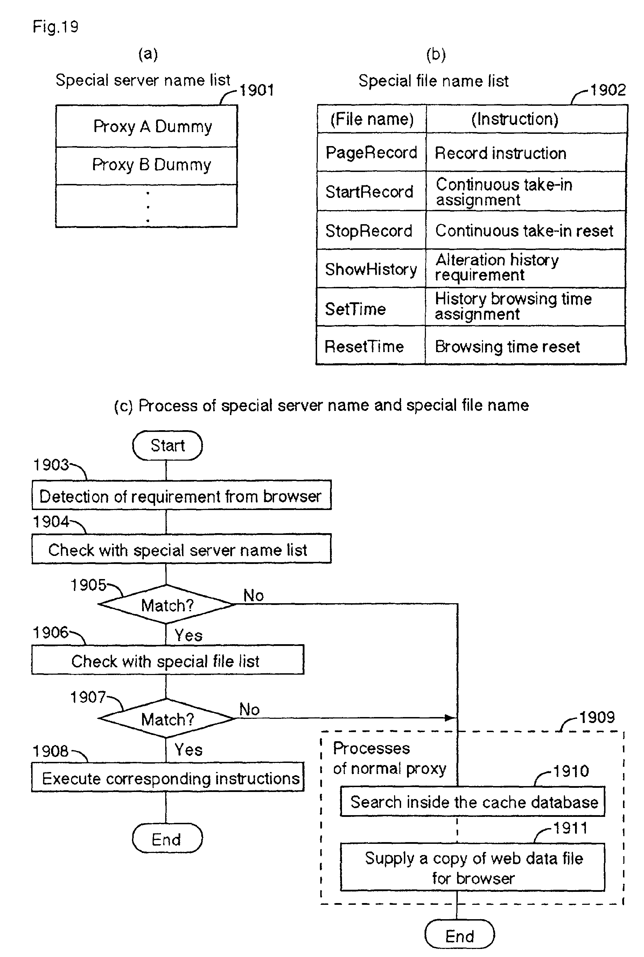

Figure 19: "Special Server Name List, Special File Name List and Their Process".

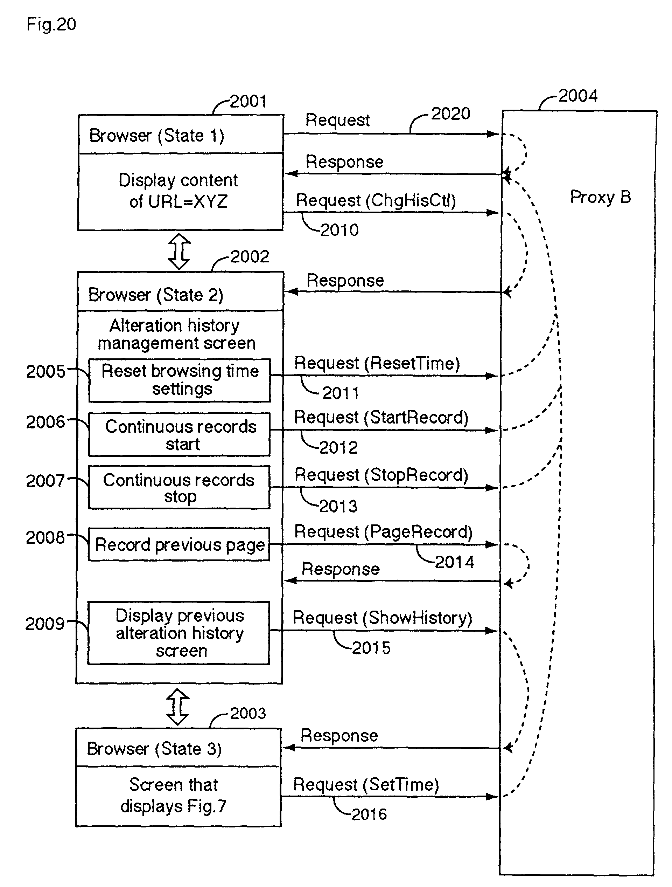

Figure 20: "Action of Alteration History Management Displayed on the Browser "

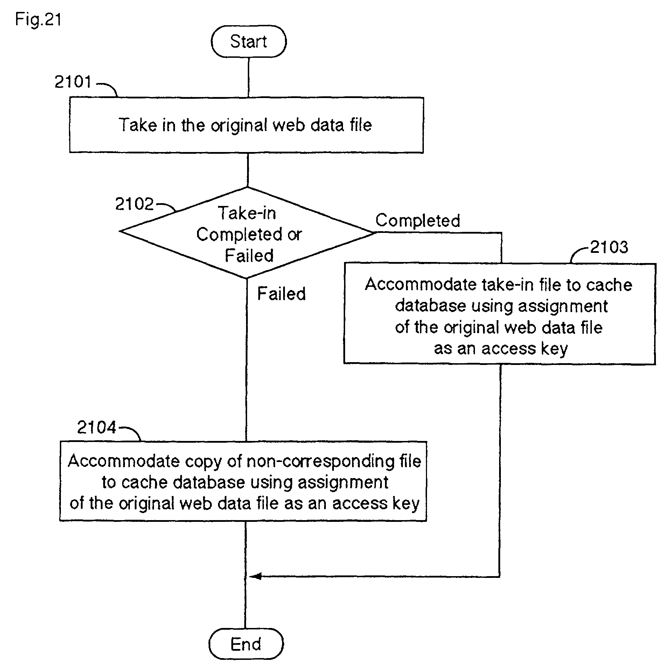

Figure 21: " Recording Process of Non-Corresponding Files".

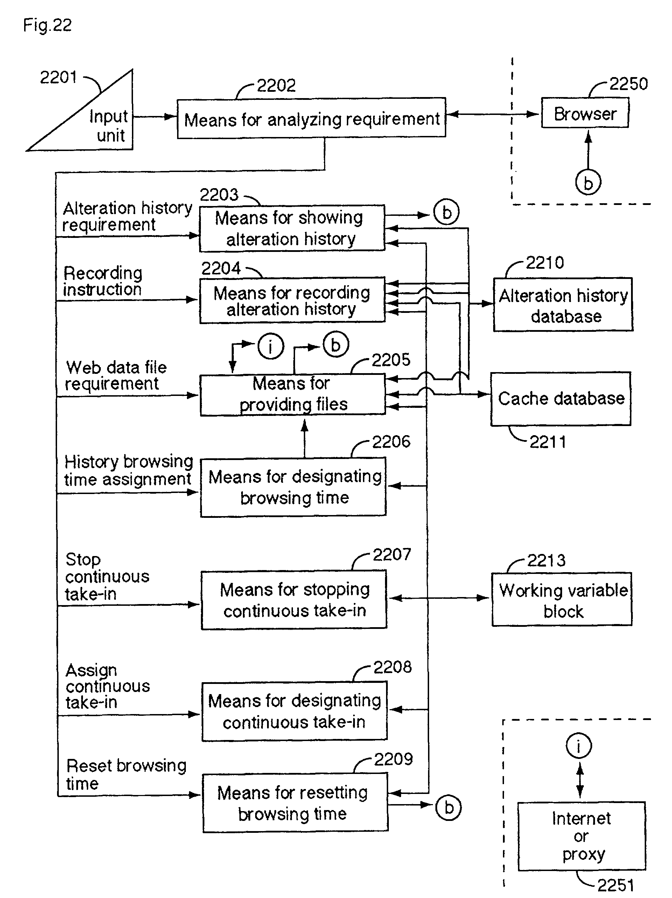

Figure 22: " Apparatus That Actualizes Proxy B".

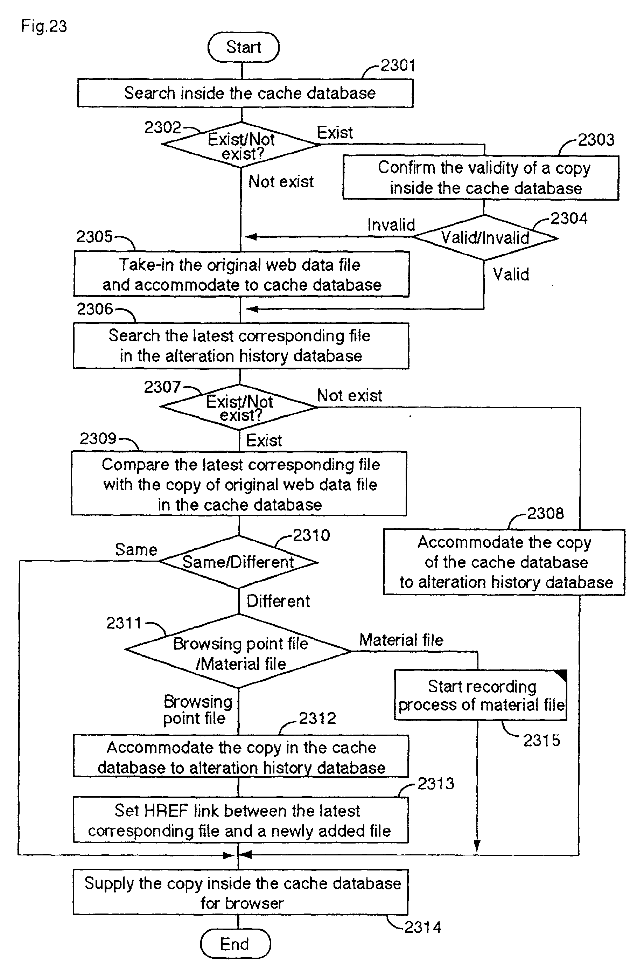

Figure 23: "Action of Proxy A Part 1".

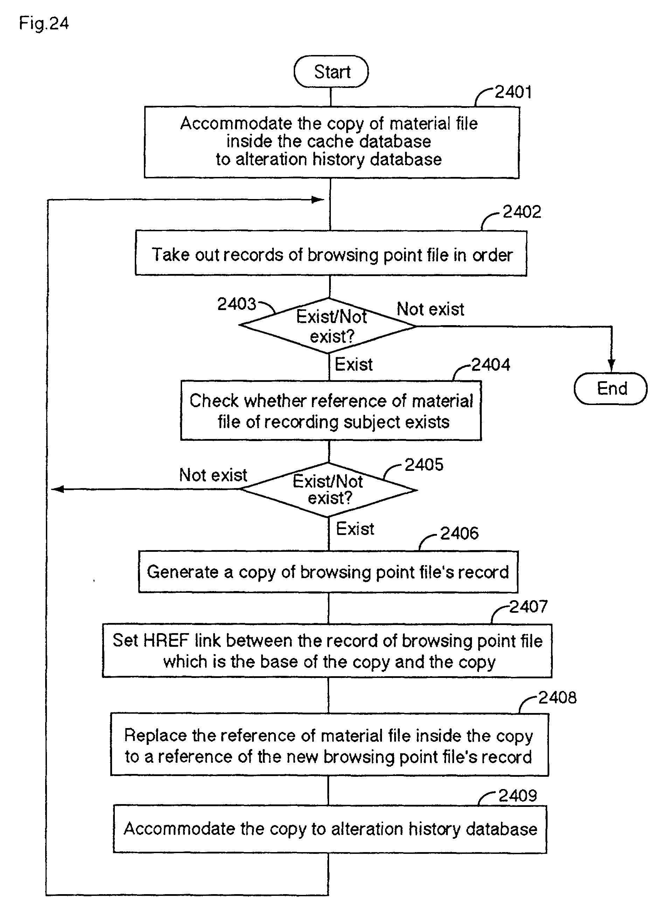

Figure 24: "Action of Proxy A Part 2".

### The Best Mode to Carry out the Invention

### <Section 8 Detail of Method B>

### <Section 8.1 Program Configuration of Proxy B>

Figure 6 shows the program configuration of Proxy B. Black triangles on the right upper corner of some steps indicate that the detail processes are described in other illustrations. Black triangles in Figures 9, 10 and 12 mean the same thing. Also, main working variables of Proxy B program are shown in the lower half of Figure 6.

Proxy B "detects requirements from Browser 301, alteration history management menu 308, and alteration history window 306, and analyzes them" 601, to start the required process. When the browser requires a web data file, it starts "process of providing files" 606. The detail of this process is shown in Section 8.4. When the continuous recording button 310 is pressed and turned on, it interprets this as "continuous taking-in assignment," and "turn on continuous taking-in variable 613" 602. When continuous recording button 310 is turned off, it interprets it as "stopping continuous taking-in" and "turn off continuous taking-in variable 613" 603. When the page record button 309 is pressed, it interprets it as "instructions to record" and starts the "recording process of alteration history" 609. The detail of this process is shown in Section 8.5. When alteration history button 311 is pressed and turned on, it interprets it as " requirement for alteration history" and starts "browsing process of alteration history " 610. The detail of this process is shown in Section 8.6. This process displays alteration history window 306. If the operator assigns a specific browsing time on this window, Proxy B interprets this as "assignment of history display time", and carries out the process of "setting browsing time variable 612" 604, "taking out the assignment of browsing point file (original/record) from the latest browsing point file variable 614" 605, and starting "process of providing files" 606. Browsing time variable 612 can be set not only at a specific time, but also just before or after specific time. Figure 5 shows great difference among them. When the alteration history button 311 is switched off, Proxy B understand as "reset browsing time", and "closes alteration history window 306" 607 and "clears the browsing time variable 612" 608.

The detail of the process of providing files is shown in Section 8.4 that of recording alteration history is shown in Section 8.5, and that of browsing alteration history is shown in Section 8.6. First, the history management file and the taking-in management file that are accessed in the above processes will be explained in Sections 8.2 and 8.3.

### <Section 8.2 Configuration of History Management File>

Section 7.2 explained the overall configuration of alteration history management data. In this Section, the configuration of history management file will be explained with Figure 7 (a), the history management file for picture File X as an example. The history management file for picture File X 702 is the history management file for picture File X. Under the condition of Figure 1 (and Figure 4), the latest (that is after T4) record of picture X is X[3], so the history management file 702 of Figure 7 corresponds to X[3] 701. When the original web data file is deleted, the history management file corresponds to record showing the deletion. The detail about this case will be explained in Section 8.9.

The assignment of the original picture File X 703 is first entered in the history management file for picture File X 702. If it is on Internet, the assignment of the server and the path of the file in the server express the assignment of the original, that is, its place to exist. This assignment is the portion left removing protocol assignment, such as http, and port assignments from URL. Generally, the history management file 712 corresponds to the web data file record 721. In it, there is an "assignment of the original web data file" 713, which is corresponds to the "assignment of picture File X" 703.

The "taking-in management file" corresponding to each record of the picture File X is in the history management file for picture file 702. In Figure 7, the taking -in management file 704 for X[3], taking-in management file 705 for X[1] and taking-in management file 706 for X[0] are recorded in time order (from new to old). Generally, in history management file 712, "taking-in management files of web data file record" is recorded in time order (from new to old). These "taking-in management file of nth web data file record" 714 to "taking-in management file of 1st web data file record" 715 are corresponding to the taking-in management file 704 for X[3] to taking-in management file 706 for X[0].

### <Section 8.3 Configuration of Taking-in Management File>

Figure 7(b) explains configuration of take-in management file, using the taking-in management file for X[1] as an example. The "assignment of X[1]" 708, which assigns recording place for taken-in web data file record inside the end-user computer, is in taking-in management file for X[1] 707. It also records "taking-in time" 709, and "the last modified time of original picture File X" 710. The last modified time of the original web data file can be attained from the value of Last-Modified field sent from the server as an HTTP header. The general configuration of a taking-in management file is shown in the "taking-in management file" 716. The "assignment of web data file record" 717 corresponds to the "assignment of X[1] 708," and the "last modified time of original web data file" 719 corresponds to the "last modified time of original picture X" 710.

The existence of either "taking-in time" 718 or the "last modified time of original web data file" 719 in all the taking-in management files is enough for alteration history management of web data. Though procedures of Method B is explained below by using the "taking-in time" 718, it is the same if the "last modified time of original web data file" 719 is used.

### <Section 8.4 Process of Providing File >

Detail of the process of providing files is shown in Figures 8 and 9. In the process, the first step is to "check browsing time variable 612" 801. This variable is set in the process of "setting browsing point variable 612" 604 in Figure 6, when the specific history browsing time is assigned in alteration history window 306. This variable is cleared in the process of "clearing browsing time variable 612" 608 in Figure 6, when the alteration history button 311 is turned off. There is also a case that specific time is re-assigned in the alteration history window 306, and this variable is rewritten by the process of "setting browsing time variable 612" 604.

If there is no assignment of the browsing time in the step to "check browsing time variable 612" 801, the program decides that the latest web data file is required by the browser, and proceeds to the process of "searching alteration history database 304" 809. This situation is the case where the browsing time variable 612 is not set, and the program decides that it is "requirement for web data file" in the process of "detection of the requirement of the browser, alteration history management menu and alteration history window and analysis" 601, and then, directly starts "process of providing files" 606. Hence, there exist data (such as URL), which assigns the original web data file required by the browser.

Using this data as a key, if corresponding history management file 712 and take in management file is found by searching alteration history database 304, the assignment of web data file record 717 of the latest take-in management file 714 can be specified. This is the process of "specifying the latest web data file record" 811.

The next process is the "validity confirmation" 812. The validity confirmation is a former browser's process to confirm the validity of cache data by making inquiries to the server for the file version etc. If it is valid, it proceeds to the next process of Figure 9 (901) and carries out "checking the file type" 902. If it is invalid, it proceeds to the other process in Figure 9 (910), and proceeds to the process of "specifying the copy of the original data file in cache database" 911. If the corresponding alteration management file 712 does not exit as a result of "searching for alteration history database 304" 809, it directly proceeds to this process.

If the copy exists in cache database, process of "validity confirmation"913 goes underway. If the copy does not exist, or if it is invalid, process of "taking-in the original web data file to the cache database" 915 goes underway. Next it carries out "checking continuous taking-in variable 613" 916, and if it is on, it starts "recording alteration history" 918. The details of this process will be explained in the next section. If the result of "checking continuous taking-in variable 613" 916 is off, it proceeds to the next process of "checking the file type" 902.

Anyway, in the series of processes, from "searching the alteration history database" 809 to "[901]" in Figure 9, the web data file record accommodated to the alteration history database 304 or the copy of the original web data file accommodated to the cache database 305, is specified.

If the file is a browsing point file by "checking the file type" 902, first Proxy B "clears the latest browsing point file variable 614 and reference file list 615" 903, and then "records the assignment of browsing point file (original/record) into the latest browsing point file variable 614" 904.

If the assignment is obtained "specifying copy of original data file in cache database", this assignment of the browsing point file (original or record) is the assignment of the original browsing point file. If the result of searching inside of the alteration history database 304 by "searching inside the alteration history database" 809 tells us that the corresponding alteration history file 712 exists, or it passes the step of "taking out the assignment of the web data file record" 808, this assignment of the browsing point file (original or record) is the assignment of the browsing point file record. In other words, if the web data file of the cache is displayed, assignment of the original browsing point file is entered in the latest browsing point file variable 614, and if the web data file record of alteration history database is displayed, this assignment of the browsing point file record is entered in the latest browsing point file variable 614.

The latest browsing point file variable 614 holds the assignment of web data file (original or record) displayed on the Browser 301, and is referred in the process of recording alteration history (Section 8.5) which starts when the page record button 309 is pressed. If the file type is ascertained to be a material file, as a result of "checking the file type" 902, "the assignment of the material file (original/record) is entered into the reference file list 615" 905.

If the process of "specify copy of original data file in cache database" 911 succeed, this assignment of the material file (original or record) is the assignment of the original browsing point file. If the result of searching the alteration history database 304 by "searching inside the alteration history database" 809 tells us that the corresponding alteration history file 712 exists, or it passes the step of "taking out the assignment of the web data file record" 808, this assignment of the material file (original or record) is the assignment of the material file. The assignment of the material file, entered in reference file list 615, indicates the material file referred by the browsing point file recorded in the latest browsing point file variable 614. This correspondence is maintained until "the latest browsing point file variable 614 and the reference file list 615 is cleared" 903, and referred to when the recording process of alteration history (Section 8.5) are executed. In the end, it "provides the copy of the required original data file in the cache database" 906. If the assignment of the browsing time exists as a result of "checking the browsing time variable 612" 801, Proxy B "specifies the history management file 712 corresponding to the required web data file" 803. It "specifies the taking-in management file 716 in time order (from new to old" 804, and "takes out taking-in time 718" 806. It "compares the taking-in time 718 with the browsing time variable 612" 807, and if the taking-in time 718 comes after the browsing time variable 612, it "specifies the next (older) taking-in management file" 804. Then it "takes out taking-in time 718" 806, and it "compares taking-in time 718 with the browsing time variable 612" 807. If the taking-in time 718 is the same or before the browsing time variable 612, Proxy B "takes out the assignment of the web data file record 717" 808 and proceeds to process of "checking the file type" 902. Procedures after this is as explained before.

### <Section 8.5 Recording Process of Alteration History>

The detail of the recording process of alteration history is shown in Figure 10. There are two cases. One is the case where the page record button 309 is pressed, and it is decided as "instructions to record", and "the recording process of alteration history starts" 609. The other case is where "continuous taking-in variable 613 is checked" 916, and it is found to be on, then "the recording process of alteration history starts" 918.

The first step is to "take out the assignment of the browsing point file (original or record) from the latest browsing point file variable 614" 1001. The next step is to "check if recorded in cache database 305 or not" 1002. If it is not in cache database 305, in other words, if Browser 301 displays the web data file recorded in the alteration history database 304, this process is discontinued immediately since the recording process has been completed already. This situation occurs when the page record button 309 is pressed or the continuous taking-in variable 613 is on, while the Browser 301 is displaying the web data file record corresponding to the alteration browsing time assigned by the end-user in alteration history window 306.

If it is recorded in the cache database 305, the next step is to "specify the copy of the original web data being displayed in the cache database"1004. Then, Proxy B starts "recording alteration history in data base 304, which assigns copy of the original web data file" 1005. The detail of this process will be explained in the latter half of this section with Figure 11.

The next step is to "take out the assignment of material file (original or record) from the reference file list 615" 1006. If it is the assignment of the original material file, the next step is to "specify the copy of the original material file in the cache database 305" 1008, then Proxy B "start the recording process of alteration history into the database which assigned the copy of the original web data file" 1005. After series of these steps are done for all the assignments of the material file (original or record) recorded in reference file list 615, the recording process of alteration history ends.

By the process above, the material file records corresponding to the assignments of the browsing point files (original or record) recorded in the latest browsing point file variable 614 and the assignments of the material files (original or record) recorded in the reference file list 615 is accommodated to the alteration history database 304.

The detail of the "recording process into the alteration history database 304, which assigns the copy of the original web data file" is shown in Figure 11. The first step is to "specify the history management file 712 corresponding to the assigned web data file in the alteration history database 304" 1101.

If the history management file 712 cannot be specified in the above process, the process of "generating the history management file 712 and accommodating it into the alteration history database 304" 1103, and "writing the assignment of the original web data file 713 into the history management file 712" 1104 is done. If the history management file 712 can be specified, the process is skipped.

The next step is to "generate the taking-in management file 716 of the web data file record, and add it to the history management file 712" 1105, followed by these steps to "write the assignment of web data file record 717 into this taking-in management file"1106, to "write the taking-in time 718 into this taking-in management file "1107, and to "write the last modified time 719 of the original web data file into this take-in management file "1108.

### <Section 8.6 Browsing Process of Alteration history >

When the alteration history button 311 is on, it is judged as a "requirement for alteration history", and the browsing process of alteration history is started by "browsing process of alteration history" 610 of Figure 6. The detail of this process is shown in Figure 12. The first step is to "copy the template of the browsing file for alteration history" 1201, as a file for writing in the data to display.

This is followed by these steps to "take out the assignment of the browsing point file (original or record) from the latest browsing point file variable 614" 1202, to "specify the corresponding history management file 712" 1203 and to "start the writing-out process of history data" 1204. The details of this process will be explained in the latter half of this section with Figure 13. The next step is to "take out the assignments of the material file (original or record) recorded in the reference file list 615 in order" 1205, and the next is to "specify history management file 712" 1203 corresponding to each of them. Then, to "start writing-out process of history data" 1204 follows. After this process is applied to all the assignment of the material file and "the content of the browsing file for alteration history is displayed on the alteration history window 306" 1207, the browsing process of alteration history ends.

Now, the writing out process of history data will be invoked with the history management file. The first step is to "write the assignments of the original web data file 713 into the alteration history browsing file" 1301. Each assignment of the original web data file is written on the place of "HTML File B" 501, "picture File X" 502, or "picture File Y" 503 in Figure 5.

Next step is to "take out the taking-in management file 614 from the history management file 712 in time order (from new to old)." 1302, followed by to "write the assignment of web data record 717 and the taking-in time 718 to the history data management file" 1304. If it is "HTML File B" 501 in Figure 5, the process writes B[0] 504, B[2] 505 over it and the left lines correspond to each are entered. Similarly, for "picture File X" 502 and "picture File Y" 503, the process writes X[0] 506, X[1] 507, X[3] 508, Y[0] 509 and Y[4] 510 and left lines correspond to each are entered. The writing out process of history data ends after all the taking-in management files 715 are processed.

### <Section 8.7 Merits of Method B Part 2>

Proxy B provides web data in response to the browser's requirement. This is the original action as a proxy. Proxy B accommodates the web data file records to the alteration history database at this stage.

One of the distinctive features of Method B is that it observes the requirement of the browsing point file, and the requirement of material file of the browser, then records the assignment of the browsing point file (original or record) displayed by the browser in the latest browsing point file variable 614 and records the assignment of the material file (original or record) which is referred by the file, into the reference file list 615. Thus, Proxy B can always grasp the material file list referred by the (displayed) browsing point file. Hence, Browser can show alteration history about the browsing point file at the present moment, that is, the data of Figure 5. When the browsing process of alteration history is started, the contents of alteration history window (of Figure 5) can be generated by showing each alteration history of the web data file, recorded in the latest browsing point file variable 614 and the reference file list 615.

On this window, the operator can assign a specific time to display the alteration history of the web data, and that data is recorded in the browsing time variable 612. If the browsing time variable 612 has the valid assignment when there is a requirement of the browser for a web data file, Proxy B provides the corresponding web data file record for the browser. With the above mechanism, Proxy B adequately deceives usual browser, which does not have the function to manage alteration history, to displays the content of alteration history. Method B need not add data to manage alteration history to HTML specification that describes a web data file.

Method B put web data of specific time to browser, by providing the web data file records that corresponds to the required time in response to a browser's requirement for the web data file. Hence, there is no need to set a complicated link as shown in Method A.

Former history management handles history in a chronological line. However, web data relate mutually and configures a network type relationship, so it has been difficult to record and reproduce the changes of various parts of such a network. Method B is a concise and adequate method for computer processing, and is easily added to the existing program. It is also a great merit that there is no need to add anything to a browser or to the HTML system.

### <Section 8.8 Browser for Proxy B>

Section 8.5 explained as follows. In response to the Browser 301's requirement, Proxy B 303 records the assignment of the browsing point file (original or record) displayed on Browser 301 to the latest browsing point file variable 614. Then Proxy B records the assignment of material file (original or record) referred by it to the reference filed list 615.

There is a case where the requirement for a web data file is not passed to Proxy 303 when the cache function of Browser 301 is working. In this case, the latest browsing point file variable 614 and the reference file list 615 cannot be generated properly. Also, even if the valid assignment exists at the browsing time variable 612 of Proxy B 303, the web data file record corresponding to the time cannot be provided for Browser 301 when Browser 301 cannot require a web data file to Proxy B 303.

Hence, the Browser 301 for Proxy B 303 has to stop the cache mechanism. That is, the item "confirming every time pages are displayed" of the section of "confirming the new version of the page saved" in the "temporary file of Internet" of Browser 301 should be selected. By this setting, the browser communicates with Proxy B for confirming version of data every time it displays web data file. Cash function of browser 301 is virtually suppressed, if Proxy B always indicates that data is changed. When Proxy B decides there is no problem in displaying the data in the cache of the browser, Proxy B 303 informs no version alteration to Browser 301.

### <Section 8.9 Display of Deleted Data>

If all references are deleted, the browsing point file is virtually deleted from the web data file. However, making list of the alteration history file 712 before, Proxy B can access to the web data file with the list and put the contents to the browser.

The original web data file is sometimes deleted, even though the reference exists. In this case, Proxy B provides the web data file that displays "no corresponding data" to the browser, as data corresponding to the assignment of the required original web data file. If a browsing point file does not exist, Proxy B provides HTML file that displays "no corresponding page". If a material file does not exit, it provides a picture file that displays "no corresponding material file". Simultaneously, it accommodates the copy of these files to the cache database 305. We assume the access key for these files is the "assignment of the original web data file", which was required of the browser. These files are called "non-corresponding files" This process is shown in Figure 21. The first step is to "take in the original web data file" 2101. If the step ends normally, it followed by the next step to "accommodates the taking-in file to ache database 305, using assignment of original web data file as access key" 2103. If there is no file that corresponds to it, the next step is to "accommodates copy of non-corresponding file to the cache database 305 using the assignment of the original web data file as an access key". 2104. The process 915 in Figure 9, "taking in of the original web data file and accommodating it to the cache database 305", is replaced with the process in Figure 21.

With the above preparation, when the page record button 309 is pressed or when the continuous recording button 310 is on, these "non-corresponding files" in the cache database are accommodated to the alteration history database 304 with the process shown in Sections 8.4 and 8.5. "Non-corresponding files" are displayed, corresponding to the time assigned at the alteration history window 306. If the original data file is provided later and recorded in the user's computer, Proxy B can show change form "Non-corresponding files" to the provided data file.

### <Section 9 Improvement of Method B>

### <Section 9.1 Corresponding to Frame Window>

### <Section 9.1.1 Problems in Alteration History Management>

Figure 14 (a) shows an example of browsing point file configuring a frame. We assume the first frame (upper frame) of V.html 1401 is Vup.html 1402, and the second frame (lower frame) is Vlow.html 1403. Also, we assume the material files that Vup.html 1402 refers to are VupFig01.jpg 1404 and VupFig02.jpg 1405, and the material file that Vlow.html 1403 refers to is VlowFig03.jpg 1406.

Receiving the content of V.html from Proxy B 303, Browser 301 requires Proxy B for the contents of Vup.html, VupFig01.jpg, VupFig02.jpg, Vlow.html and VlowFig03.jpg in order. If the process of Proxy B (explained in Sections 7 and 8) is carried out on the condition that all the HTML files are judged as a browsing point file, the information so far disappear in the process of "clearing the latest browsing point file variable 614 and reference file list 615" 903 at the time Vlow.html is received. Then Vlow.html is recorded on the latest browsing point file variable 614, and VlowFig03.jpg is recorded on the reference file list. However, at this point, Vup.html, VupFig01.jpg, VupFig02.jpg, Vlow.html, and VlowFig03.jpg are displayed on the browser window. If the page record button 309 is pressed, Proxy B judges it as "record assignment", and start "recording process of alteration history" 609. But only Vlow.html and VlowFig03.jpg can be recorded in the alteration history database.

### <Section 9.1.2 Management Process of Alteration History Corresponding to the frame Window>

To avoid the problems of Section 9.1.1, the proxy holds the plural latest browsing point file variables and reference file lists in this invention. Put it concretely, in the providing files process, the range from S to E 907 in Figure 9 is replaced with the process from S1501 of Figure 15 to E1612 of Figure 16. The processes of Figure 15 and 16 are explained below.

The first step is to "check the file type" 1502, and if it is found to be a browsing point file, the next is to "take out the reference file list 615 in order" 1503. It is necessary to pay attention to that Proxy B sometimes has more than one file list (by the latter process). These steps to "take out assignment of the material file (original or record) in order" 1505 from the reference file list 615 and to "compare them with the assignment of the browsing point file (original or record) to be provided with" 1507 follow. If there is no corresponding file when all the assignments of material file (original or record) of all the reference file lists are compared with all the assignments of the material file (original/record), the next steps are to "delete the latest browsing point file variable, leaving one" 1511, to "delete the reference file list, leaving one" 1512 and to "clear the latest browsing point file variable 614 and the reference file list 615" 1513. This is to make the content of the latest browsing point file variable and reference file list, which is left, empty. Then, the next step is to "record the assignment of the browsing point file (original or record) to be provided to the latest browsing point file variable 614" 1514.

The above process corresponds to the situation where Proxy B receives requirement of V.html from Browser 301 displaying the frame configuration of Figure 14 (1). Even though a frame has been displayed before, and plural sets of browsing point file variables and reference file lists exist, all the sets are deleted except one, the value of the variable of this set is made empty, and V.html (assignment of the original or the record) is entered.

The next is to "check whether the assignment of the browsing point file (original or record) has frame structure" 1603. If the browsing point file has frame structure, the next is to "take out the browsing point files referred as contents of the frame, in order" 1605. For instance, if the browsing point file to be provided is V.html, there is a description <FRAME SRC= "Vup.html"> <FRAME SRC="Vlow.html"> in the block begins with <FRAMESET>. Then, first, the assignment of the original to Vup.html is taken out. The next step is to "check whether the assignment of browsing point file (original or record) to be provided is that of the original or record", and if it is the assignment of the record, the next is to "change the assignment of the browsing point file taken out to the assignment of the browsing point file record" 1609. In other words, if the assignment of V.html to be provided is the assignment of the record corresponding to the specific history browsing time, the assignment of the original to Vup.html is changed to the assignment of the record corresponding to the same history browsing time. This is carried out from "specifying the history management file corresponding to the required web data file" 803, and "taking out the assignment of the web data file record" 808, by designating the assignment of original to Vup.html. Then "this assignment is entered in the reference file list generated last" 1610. Here, the reference file list generated last is either one that is generated in the process of "generating a new corresponding reference file list" 1510, one that exists from the first or one that is left in the process of "deleting all the reference file list (original or record) except one" 1512. The same process is applied to Vlow.html, and this process proceeds to "E" 1612.

The next step is to "check whether the assignment of the browsing point file (original or record) to be provided has the assignment of a frame" 1603. If there is no assignment of a frame in the browsing point file to be provided, the process proceeds directly to "E" 1612.

The followings describes the case, where the subject file is a browsing point file, and the assignment is match some assignment of material file (original or record) found in steps to "take out the reference file lists 615 in order" 1503, to "take out the assignments of material file (original or record) in order" 1505, and to "compare them with the assignments of the browsing point file (original or record) to be provided with" 1507. In this case, the subject file is judged as a browsing point file, which configures a part of frame configuration. Then the next step is to "generate the new latest browsing point file variable and enter the assignment of the browsing point file (original or record) to be provided" 1509, and to "generate a new corresponding reference file list" 1510 follows. At this point, a new set of the latest browsing time file variables and reference file lists are added.

For example, when the browser requires Proxy B for V.html and next Vup.html, a new set of the latest browsing point file variable and reference file lists are added and the Vup.html is entered in this latest browsing file variable, because the assignment of the Vup.html original is on the latest reference file list.

The next is to "check whether the assignment of the frame exists in the assignment of the browsing point file (original or record) to be provided with" 1603. If not, the process proceeds to "E" 1612. If exists, that is, V.html 1401 is required, then the next step is to "take out the assignment of the browsing point file referred to as the content of the frame in order" 1605, and Vup.html and Vlow.html are taken out. The process after this has been already explained.

If the subject file is a material file, as a result "checking the file type" 1502, the next is to "enter the assignment of the material file (original or record) in the reference file list generated last "1611, and the process proceeds to "E" 1612.

### <Section 9.1.3 Merits of Method B Part 3>

Another distinctive feature of Method B is that plural sets of the latest browsing point file variable 614 and reference file list 615 are generated in tree structure, corresponding to the frame structure. Method B can specify the browsing point file and material file of the web data file displayed. Therefore, the alteration history of these files can be displayed on the alteration history window 306 of Figure 5, when the alteration history button 311 is pressed.

When HREF in a certain frame is clicked, the frame is replaced with a new browsing point file. Meanwhile, all the latest browsing point file variable and reference file lists of the Proxy B are cleared, and a new browsing point file variable and reference file list are generated for the new browsing point file. Thus, it is impossible to record frame configuration itself that is rearranged. The original frame configuration assigned by the original web data file and the web data files assigned by HREF are recorded as different things.

Same as the browser, Proxy B can record the rearranged frame itself by analyzing the content of the browsing point file, reproducing the rearrangement of the frame by Proxy B, and then generating a new browsing point file that expresses the rearranged frame configuration, and recording it. This process is simple if the function of Proxy B can be actualized as a part of a browser function.

### <Section 9.2 Alteration History Management Interface Using a Browser>

Proxy B has an alteration management menu 308 and alteration history window 306 as an exclusive user interface. These interfaces (alteration history management interfaces) can be displayed on the display unit 302 of Browser 301, and receive directions by of end-users (operators). This is shown below.

### <Section 9.2.1 Insertion of a Code into Browsing Point File>

The method to display the alteration history management interface on the browser display by inserting a code into the content of the browsing point file which is passed to Browser 1701 from Proxy B 1705 is explained with Figure 17 (a). If the browsing point file for which Browser 1701 requires Proxy B 1705 is an HTML file, code to show alteration history management bar 1706 is inserted to the content of the HTML file. This code can be a cord that assigns ActiveX control, or combination of a code that displays a button and HREF tag. ActiveX and Proxy B can communicate each other if ActiveX designed for this purpose. The method of transmitting signals to Proxy B by an HREF tag is explained in Section 9.2.3.

The procedure of Proxy B 1705 to display the alteration management bar 1703 is shown in Figure 17 (b). First, it analyzes the requirement of the browser 1701, and "specifies the required browsing point file" 1710. This file may exist in the cache database 305 or in the alteration history database 304. If it does not exist in either of them, it receives the file from the server and accommodates it to the cache database 305.

Now, to provide the contents of file 1707 to browser 1701, it first "sends the first portion 1708 to Browser 1701" 1711, then "sends code 1706 to show alteration history management bar to Browser 1701" 1712, and finally, "sends the remaining portion 1701" to the browser 1713. If the code to show alteration history management bar display code 1707 was already written at the time of recording data to alteration history database 304, this data is sent as it is to browser 1701 without this process.

With the above procedure, the alteration history management bar 1703 is displayed on the upper part of the window 1702 of Browser 1701, and the content of the original browsing point file is displayed below that. If ActiveX control, which displays the alteration history management bar, and Proxy B 1705 can communicate each other, when the button of alteration history management bar 1703 is pressed, the data is transmitted to the proxy by inter-process communication and the proxy "starts the browsing process of alteration history " 610.

If there is no exclusive interface for Proxy B, it is necessary to change the process of "displaying the content of alteration history browsing file on the alteration history window" 1207, and to display it on the browser window 1702. However, in an http procedure, only the responding data to the requirement of a browser is transmitted, so there is a need to actualize the process of "displaying the content of the alteration history browsing file" procedure in response to the browser's requirement. The detail of this is shown in Section 9.2.4.

### <Section 9.2.2 Insertion of a Frame>

Alteration history management interface can be implemented by inserting a frame, instead of directly inserting a button for alteration history management to the browser window. Figure 8 is used to explain this.

If there is a requirement from Browser 1801 to Proxy B 1804, designating "URL=XYZ", the latest record of the web data file is specified in the alteration history database 1805. Or the latest web data file is taken in and recorded in the alteration history database 1805. This is the i-th "record content of XYZ" 1811. This file name is called XYZ_BaseRec[i], temporarily. Proxy B 1804 also generates another file, XYZ[i]. File XYZ[i] configures a frame and assigns the "file to show alteration history management bar" 1810 as the first frame (frame a). It assigns XYZ_BaseRec[i] 1811 as the next frame (frame b).

When the content of XYZ[i] is sent to browser 1801 from Proxy B in response to the requirement of Browser 1801, designating "URL=XYZ", the browser requires for the "file to show alteration history management bar" 1810 and the contents of XYZ_BaseRec[i]. Then, the proxy responds them by sending the data in history management file to browser 1801. Hence, the frame of alteration history management bar (frame a) and the frame of contents for URL=XYZ (frame b) are displayed on the browser.

### <Section 9.2.3 Directions to Proxy B by HREF tag>

One example of code 1706 to show alteration history management bar browsing is characters string that assigns an HREF tag. Code that displays a continuous recording button can be written:
<A HREF="http://ProxyBDummy/StartRecord"> page recording</A>.
When this button is pressed, "http://ProxyBDummy/StartRecord" is passed to Proxy B 1705 as a requirement of browser 1701. Since the same code can be described in alteration management bar of Figure 18, the following explanation is common among browser 1701 and Proxy B 1705 of Figure 17, and among browser 1801 and Proxy B 1804 of Figure 18. Only Figure 17 will be explained in the following.

Figure 19 explains the process of Proxy B 1705 responding to "http://ProxyBDummy/StartRecord". Proxy B 1705 has a special server name list 1901 shown in Figure 19 (a), and a special file name list 1902 shown in Figure 19 (b). Proxy B takes out character characters passed as a requirement at "detection of requirement of browser 1701". It "compares (the server name in it) with the special server name list 1901" 1904, and if it does not match, it proceeds to the normal proxy process 1909.

If it match to some item in the list by the step of Proxy B to "check with special server name list 1901" 1904, Proxy B next "checks the file name (file path) with the special file name list 1902" 1906. If it does not match, Proxy B proceeds to the normal proxy process 1909. If it does, Proxy B carries out assigned instruction in the special file name list 1902. For example, since the file name "PageRecord" corresponds to "record instruction", Proxy B starts "recording process of alteration history" 609. If the content of Figure 5 is displayed on browser 1701 and an operator indicates specific browsing time, character string (for example) "http:// Proxy Bdummy/SetTime/05061998" is sent to Proxy B. In this case, Proxy B detects that the special file name is "SetTime," and interprets character string "06051998" as browsing time of June 5th, 1998. Then it "sets browsing time variable" 604, "takes out the assignment of browsing point file (original or record) from the latest browsing point file variable" 605, and "starts file providing process" 606. Note that, dealing with the character string, process "05061998" is omitted in the flowchart of Figure 19 (c).

### <Section 9.2.4 Alteration History Management Interface with Browser Display>

Alteration history management interface can be actualized only with a window of browser. This is shown in Figure 20. Proxy B 2004 sends the content of the web data file in response to the browser's requirement 2020 The button data, which requires alteration history management window, is entered in the content by the procedure mentioned in Section 9.2.1.
When the button of browser 2001 at state 1 is pressed, "http:// ProxyBDummy/ChgHisCtl" is sent to Proxy B as a requirement. The requirement (ChgHisCtl) 2010 in Figure 20 shows this. If the character string ChgHisCtl is registered on the special file list 1902, the corresponding instruction is carried out in the process of the Section 9.2.3, and the web data file to show the alteration history management window is sent to the browser. This is a reply to the browser's requirement, that is, "http:// ProxyBDummy/ChgHisCtl", and is shown on the browser. The browser is in the state 2 (2002).

When one clicks the button to display previous alteration history window, which is on the alteration history management window of browser 2002 (state 2), the requirement 2015 (ShowHistory) is sent to Proxy B 2004. Then Proxy B 2004 check it with the special file name list 1902, interprets it as an alteration history requirement, and starts the "browsing process of alteration history" 610. Then, at the step to "display the content of alteration history browsing file to the alteration history window" 1207, the browsing point file that expresses Figure 5 is sent to Browser 2001. This is an answer to the browser's requirement "ShowHistory", and is displayed on the browser, which is in state 3 (2003).

When the end-user directs a specific time to display data on this browser window, the requirement 2016 (SetTime) is passed to Proxy B 2004. Proxy B "sets browsing time variable" 604, "takes out the assignment of the browsing point file (original or record) from the latest browsing point file variable" 605, and "starts the process of providing file" 606, and the browsing point file record of directed time is passed to the browser, which is in state 1 (2001).

When the "reset browsing time settings" button 2005 is pressed at browser 2002 of state 2, the requirement (ResetTime) 2011 is passed to Proxy B. Proxy B interprets it as an instruction to "reset browsing time", and "clears browsing time variable" 608, and passes the content of the web data file, which was displayed by the original browser, to the browser. As a result, it returns to the original browser 2001 of state 1. When the "start continuous recording" button is pressed at browser 2002 of state 2, the requirement 2012 (StartRecord) is passed to Proxy B. Proxy B interprets it as an instruction of "continuous taking-in assignment", "turns on the continuous taking-in variable" 602, then passes the content of the web data file that the original browser had displayed to the browser. When the "stop continuous recording" button is pressed at browser 2002 of state 2, the requirement 2013 (StopRecord) is passed to Proxy B. Proxy B interprets it as an assignment to "reset continuous taking-in" and "turn off the continuous taking-in variable" 603, then passes the content of the web data file that the original browser displayed to the browser. As a result, the browser returns to the original browser 2001 of state 1.

### <Section 9.2.5 Merits of Method B Part 4>

Communication between a browser and the proxy takes place in the form that a proxy answers a requirement of a browser for a web data file. It has been difficult to actualize any other way of communication other than the one given above, if a browser cannot be developed originally.

Previous sections described a technique to actualize a browser window to implement the interface of Proxy B. The main points are the following:
(1) Insert a button for history management and an HREF tag to the window of browser.
(2) Set a special server name and a special file name, which become keywords for starting the special process of Proxy B, on the HREF tag.
(3) The data configuration and process of Figure 19, to process the special server name and the special file name given.
(4) The process of passing data generated by Proxy B in response to the requirement of the browser when the above HREF assignment is clicked.
The above technique can be applied not only to Method B, but also to the communication between browsers and proxies widely.

### <Section 9.3 Method B That is Actualized as a Browser Function>

If the function of Method B is actualized as a part of a browser function, it becomes much easier for an end user to handle. In this case, an expression "Proxy B deceives a browser adequately" in "Merits of Method B part 2 (Section 8.7)" becomes meaningless.

However, HTML specification still has no consideration to history management. That is, references to material files and link to another browsing point file, which can be found by analyzing a browsing point file (HTML file), are explained as the assignment of the original web data file.

In response to these assignments of the original web data file, Proxy B finds web data file record that corresponds to the valid assignment in the browsing time variable 612. If it exists in the alteration history database 304, Proxy B provides it to the browser". That is the distinctive feature of Method B. Even if the function of Method B is actualized as a part of a browser function, browser has the original browsing function that analyzing the HTML File, and function of Method B that provide an adequate web data file record.

### <Section 9.5 Correspondence with the hardware>

### <Section 9.5.1 The Environment Where the Program Can Work>

Proxy B is actualized as a program, and can work as a process in the same end-user computer as that of the browser. It can also activate as a process on a different computer from the browser's, just like a former proxy. As shown in Section 9.2, as long as the alteration history management interface is displayed on the browser window, the end-user has no problem in operating, even if Proxy B acts in a different computer from the browser.

If Method B is actualized as a browser function, Method B can be actualized in any environment where the browser can work.

### <Section 9.5.2 Hardware that Actualizes Method B>

Proxy B can be actualized in hardware. This is explained with Figure 22. In this section, the hardware that actualized Proxy B, which displays alteration history interface on the browser window, is explained by the method mentioned in Section 9.2. Proxy B receives operator's directions from the input unit 2201. The signals from the input unit 2201 and browser 2250 are analyzed in "means for analyzing requirement" 2202, and then a signal is sent to the corresponding means.

Signals of a requirement for alteration history are sent to the "means for showing alteration history" 2203. Here, the browsing process of alteration history (section8.6) of Figure 12 is executed. From these means, Proxy B accesses alteration history database 2210, takes out the alteration history and edits it, and passes it to browser 2250. At this point, it accesses browsing time variable 612, latest browsing point file variable 614, and reference file list 615 of process variable block are accessed.

Recording signals are sent to "means for recording alteration history" 2204. Here, the recording process of alteration history (Section 8.5) of Figure 10 and 11 is executed. Thus, Proxy B takes out the target record by accessing the cache database 2211, and sets to alteration history database 2210. At this point, it accesses to the latest browsing point file variable 614 and reference file list 615 of the process variable block 2213.

Signals to require web data file are sent to "means for providing files" 2205. Here, the process of providing file (Section 8.4) of Figure 8 and 9 is executed. Thus, Proxy B accesses to "Internet or proxy" 2251, cache database 2211, and alteration history database 2210, and provides the web data file to browser 2250. At this point, it accesses to browsing time variable 612, latest browsing point file variable 614 and reference file list 615 of working variable block 2213.

Signal of history browsing time is sent to "means for designating browsing time" 2206. Here, "browsing time variable is set" 604, and the process of " taking out the assignment of browsing point file (original or record) from the latest browsing point file variable" 605. These variables exist in process variable block 2213. Then, a signal is sent to "means for providing files" 2205.

Signals to reset continuous taking-in are sent to "means for stopping continuous taking-in" 2207. Here, a signal is sent to the working variable block 2213 to "turn off continuous taking-in variable 613" 603.

Signals of continuous taking-in assignment are sent to "means for designating continuous taking-in" 2208. Here, a signal is sent to the process variable block 2213, to "turn on continuous taking-in valuable613" 602.

Signal to reset browsing time is sent to "means for resetting browsing time" 2209. Here, Proxy B "closes alteration history window" 607, then sends a signal to process variable block 2213, to "clear browsing time variable 612" 608.

### <Section 10 The Detail of Method A>

### <Section 10.1 Proxy A>

The proxy that actualizes Method A is called Proxy A. The relationship of Proxy A and the web browser is the same as that of Figure 3, replacing Proxy B to Proxy B 303. However, Proxy A has neither alteration history button 311 nor alteration history window 306. As shown in Figure 2, records of the web data file recorded as alteration histories, are mutually related by HREF or SRC tags. So it is enough to record each file in an ordinary directory configuration (not like in a database which specifies files by special key data). For simplicity, we assume the case where all the alternation history of web data window are recorded. Under this condition, the continuous recording button 310 is being constantly pressed and the page-recording button does not have meaning. The action of Proxy A under this condition is explained with Figures 23 and 24.

When a requirement of Browser 301 that assigns the browsing point file (URL=XYZ) is passed to Proxy A, Proxy A "searches inside of the cache database 305" 2301 to look for the valid data of the assigned URL. If it does not exist, or even it does, if it is ascertained that it is invalid as a result of "confirmation of the validity of a copy in the cache database" 2301, Proxy A "takes in the original web data file and accommodates it to the cache database" 2305. In either way, through the above procedure, the valid data of URL required will now exist in the cache database 305.

Next, Proxy A "searches for the latest corresponding file inside the alteration history database 304" 2306. For example, the assigned URL assigns the original HTML File B, and it is just before T3, the corresponding files are B[2]206, B[1]205 and B[0]204, and the latest file is B[2] 206. If the latest corresponding file, that is, the corresponding file does not exist, Proxy A "accommodates the copy in the cache database to the alteration history database" 2308, and ends with "providing the copy in the cache database 305 for the browser" 2314.

If the corresponding file exists, Proxy A "compares the latest corresponding file with the copy of the original web data file in the cache database 305" 2309, and if they are the same, it ends with "providing the copy in the cache database 305 for the browser" 2314 process. If it is ascertained that they are not the same when Proxy A "compares the latest corresponding file with the copy of the original web data file in the cache database 305" 2309, then it "judges if the corresponding file is a browsing point file or material file" 2311. If it is a material file, it "starts the recording process of material file" 2315. The detail of this will be explained in the second half of this section. It ends with "providing the copy in the cache database 305 for the browser" 2314.

If it is a browsing point file, it "accommodates the copy in the cache database 305 to alteration history database" 2312, and "sets an HREF link between the latest corresponding file and newly added file" 2313. If this is at T3, the process is setting an HREF between HTML File B[2] 206 and B[3] 207 (newly added). It ends with "providing the copy in the cache database 305 for the browser" 2314 process.

"The recording process of material file" is explained below with Figure 24. First, Proxy A "accommodates the copy of the material file in the cache database to the alteration history database" 2401. Next, it "take out the records of the browsing point file (of the end-user computer) in order" 2402, and "checks (the browsing file) whether the reference of material file to record exist or not" 2404. If it does not exist, it "takes out the records of the browsing point file in order" 2402 again. If it exists, Proxy A "generates the copy of the record of the browsing point file" 2406, "sets an HREF link between the record of the browsing point file, which is the base of the copy, and the copy" 2407 Then, it "replaces the reference of the material file in the copy with the reference of the new browsing point file record" 2408, "accommodates the copy to the alteration history database" 2409, and returns to "taking out the records of browsing point file in order" 2402. The material file recording process ends after the above process is applied to all the browsing point files in the end-user computer.

### <Section 10.2 Improvement of Method A>

Section 6.3 explained that "when there is change in the material file, the material file record is recorded as a simple record in the end-user computer and the HTML file, which changes the reference to the simply recorded file, is recorded as alteration history which replaced the reference to the new file, that is a main point of Method A". To handle the frame window, the HTML file referring to the simple recorded HTML file is, likewise, simple recorded. This corresponds to the frame window corresponding process (Section 9.1) of Method B.

Section 9.2 explained the interface of the alteration management that uses a browser in opposition to Method B. Similarly to Method A, alteration history management bar 1703 or a frame of the alteration history management bar (a frame 1802) can be also displayed on the browser window. The interface of the alteration history management (Section 9.2.4) on the browser window can be also actualized by the same mechanism.

Method A can be implemented on a proxy, which is called as Proxy A. End-user controllability will be greater if the function of Method A if actualized as part of a browser function.

### Industrial Applicability

The former history management has handled history in a chronological line. However, web data configures a network type relationship relating mutually. It has been difficult to record and reproduce the changes in various part of such a network. This invention makes possible for end-users to manage alteration history of web data files realistically.

A distinctive feature of the procedure of Proxy B 303 is to "deceive" Browser 301 adequately. The current HTML system describes web data file, but has no capability to handle data managing alteration history. Method B makes possible to "display the web data file record at the exact moment it is assigned, including precise reproducing of the files' mutual relationship".

Furthermore, Method B can manage alteration history of the frame window by generating plural combinations of the latest browsing point file 614 and reference file list 615 in tree configuration.

Addition to this, it becomes possible for operators to communicate with a proxy on a browser window, by "inserting a button for history management and HREF tag to the content of a browsing point file which is passed to the browser by Proxy B", "designating a special server name and special file name to an HREF, which are keywords to start the special process of Proxy B" and "starting a corresponding process by detecting these keywords".

Method A requires more processes than Method B to record alteration history, but if there is a web data file record (Figure 2, for instance) generated by Method A, alteration history of web data can be displayed by a usual browser, that is, there is no need of proxy to work specially to display alteration history.

Theoretically, computer software can actualize any kind of process. However, if a procedure is actualized just like human considerations, it will be complicated for the computer to process, and need much time and costs to develop it. These problems also make difficult to remove bugs, and difficult to add and alter functions. On the contrary, since Method A and Method B are simple for the computer process, they do not have such problems. Also, there is no need to add anything to HTML specifications. If a proxy actualizes Method A or Method B, typical browsers have no need to add any new functions. These are the merits of Mewthod A and Method B.

## Claims

1. A method for browsing a web data record, comprising;
[a] a process for holding (604) an assignment (612) of a browsing time of browser,
[b] a process for receiving (601) an assignment of a web data file, and taking out (808) web data file record matching (807) to said assignment (612) of browsing time of browser among corresponding web data records.

2. The method for browsing a web data record according to claim 1, comprising;
[c] a process for detecting (802) that browsing time of browser is unassigned, specifying (811, 911, 915) latest web data, and providing (906) it.

3. The method for browsing a web data record according to claim 1, comprising;
[d] a process (904) for holding record (614) of a requirement for a browsing point file,
[e] a process (905) for holding record (615) of requirement of a material file,
[f] a process for detecting (601) alteration history requirement, and specifying (1203) alteration history of web data file corresponding to record (614) of said requirement for browsing point file or record (615) of said requirement for material file, and taking out (1204) each alteration history.

4. The method for browsing a web data record according to claim 3, comprising;
[g] a process for clearing (903) record of requirement for material file when recording (904) said requirement for browsing point file.

5. The method for browsing a web data record according to claim 3, comprising;
[h] a process for checking (1603) whether assignment of a frame exists in browsing point file required, and registering (1610) said assignment of browsing point file of as referenced file, if there is said assignment of a frame,
[i] a process for checking (1507) whether said assignment of browsing point file required has been already recorded as referenced file, and generating (1509) a new variable recording requirement of browsing point file and generating (1510) a new list recording referenced files, if they are already recorded.

6. The method for browsing a web data record according to claim 5, comprising;
[j] a process for clearing (1511) record of requirement for browsing point file and clearing (1512) reference file list, if said assignment of required browsing point file is not recorded as reference file.

7. A communication method between a proxy and operator, utilizing user interface of a browser, comprising;
[k] a process (1712) for inserting a code (1706) for communication to a part of data displayed on browser,
[1] a process for analyzing (601) requirement of web data file and starting (1908) a process of proxy when a assigned server name (1901) is detected (1905).

8. The method for browsing a web data record according to claim 3, comprising;
[k] a process (1712) for inserting code (1706) for communication into data to be displayed on browser,
[1] a process for analyzing (601) web data file requirement from browser and invoking (1908) a process of proxy when assigned server name (1901) is detected (1905).

9. A method for browsing a web data record, comprising;
[a] a process for holding (604) an assignment (612) of a browsing time of browser,
[b] a process for receiving (601) an assignment of a web data file, and taking out (808) web data file record matching (807) to assignment (612) of browsing time of browser among corresponding web data records.
[m] a process for recording (2104) a file indicating non-corresponding, when taking-in (2101) of required web data file fails.

10. An apparatus for reading records of web data file, comprising;
[n] a working variable block (2213) holding an assignment (612) of browsing time of browser,
[o] a means 2202 to analyze requirement that receives "assignment of web data file" which was required to display it on browser,
[p] a means 2205 to provide file that takes out (808) record of web data file corresponding to said assignment (612) of browsing time of browser, from corresponding web data records.

11. An apparatus for reading records of web data file, comprising;
[q] a work variable block 2213 that holds assignment (612) of browsing time of browser, record (614) of requirement for a browsing point file, and record (615) of requirement for material file
[o] a means to analyze requirement 2202 that receives "assignment of web data file" which was required to display on browser, and
[p] a means to provide file 2205 that takes out (808) record of web data file corresponding to assignment (612) of browsing time of browser, from corresponding web data record
[r] a means to provide file 2205 that generates a record (614) of a requirement for browsing point file, a record (615) of requirement for material file
[s] a means to analyze requirement 2202 to detect (601) assignments to record alteration history
[t] a means to display alteration history (2203) that specifies (1203) alteration history of web data file corresponding to record (614) of requirement for above browsing point file and record (615) of requirement for above material file in alteration database (304), and taking out (1204) alteration history from there.

12. A computer readable medium that records a program realizing a method for browsing a web data record, comprising;
[a] a process for holding (604) an assignment (612) of a browsing time of browser,
[b] a process for receiving (601) an assignment of a web data file, and taking out (808) web data file record matching (807) to assignment (612) of browsing time of browser among corresponding web data records.

13. A method for recording web data in end-user computer, comprising;
[u] a process for specifying designating (2404) record of browsing point file that refers to a material file that is newly recorded (2404)
[v] a process for generating (2406) a copy of record of this browsing point file
[w] a process for placing (2408) reference of copy to material file with reference to the record of the material file newly recorded.
